# EUROPEAN PATENT APPLICATION

(11) **EP 4 625 699 A1**
(43) Date of publication of application: **01.10.2025**
(21) Application number: 23902623.0
(22) Date of filing: 09.12.2023
(51) Int. Cl.: H01Q 3/02

(54) **BASE STATION ANTENNA AND BASE STATION**

(30) Priority: 16.12.2022 CN 202211625483
(71) Applicant: Huawei Technologies Co., Ltd., Shenzhen, Guangdong 518129 (CN)
(72) Inventor: LIU, Mingsheng, Shenzhen, Guangdong 518129 (CN); WANG, Chongyang, Shenzhen, Guangdong 518129 (CN); LI, Xiaoqiang, Shenzhen, Guangdong 518129 (CN); ZHANG, Zhitong, Shenzhen, Guangdong 518129 (CN); LI, Weimin, Shenzhen, Guangdong 518129 (CN)
(74) Representative: Pfenning, Meinig & Partner mbB
(86) International application number: PCT/CN2023/137711
(87) International publication number: WO 2024/125427

(57) **Abstract**

This application provides a base station antenna and a base station. The base station antenna includes a rotation shaft, a first reflection plate, a second reflection plate, a first radiator, and a second radiator. The first reflection plate includes a first surface and a second surface that are disposed in opposite directions, and the first radiator is disposed on the first surface of the first reflection plate. The second reflection plate includes a first surface and a second surface that are disposed in opposite directions, and the second radiator is disposed on the first surface of the second reflection plate. The first reflection plate is connected to the rotation shaft, the second reflection plate is rotatably connected to the rotation shaft, and the rotation shaft is located between the second surface of the first reflection plate and the second surface of the second reflection plate. The base station antenna can be miniaturized when antenna signals can be radiated in different directions and antenna beam directions can be adjusted.

## Description

### BASE STATION ANTENNA AND BASE STATION

This application claims priority to Chinese Patent Application No. 202211625483.5, filed with the China National Intellectual Property Administration on December 16, 2022 and entitled "BASE STATION ANTENNA AND BASE STATION", which is incorporated herein by reference in its entirety.

### TECHNICAL FIELD

This application relates to the field of antenna technologies, and in particular, to a base station antenna and a base station.

### BACKGROUND

With development of wireless communication technologies, especially wide application of the 5th generation (5G, the 5th generation) communication technology, a base station antenna becomes an important carrier for increasing a wireless communication capacity (transmission rate). A conventional base station antenna includes a reflection plate and a radiating element disposed on the reflection plate. With development of the multiple input multiple output (MIMO, multiple input multiple output) technology, a quantity of required oscillators increases exponentially, and therefore a quantity of reflection plates increases continuously. In a conventional manner of disposing a plurality of reflection plates, two adjacent reflection plates are hinged with each other. In this way, a radiation direction of a radiating element can be adjusted by adjusting an angle of the reflection plate. However, in the conventional manner of disposing the plurality of reflection plates, a structure for the plurality of reflection plates is not compact, and it is difficult to implement miniaturization.

### SUMMARY

This application provides a base station antenna and a base station that can be miniaturized when antenna signals can be radiated in different directions and antenna beam directions can be adjusted.

According to a first aspect, this application provides a base station antenna. The base station antenna includes a rotation shaft, a first reflection plate, a second reflection plate, a first radiator, and a second radiator. The first reflection plate includes a first surface and a second surface that are disposed in opposite directions, and the first radiator is disposed on the first surface of the first reflection plate. The second reflection plate includes a first surface and a second surface that are disposed in opposite directions, and the second radiator is disposed on the first surface of the second reflection plate. The first reflection plate is connected to the rotation shaft, the second reflection plate is rotatably connected to the rotation shaft, and the rotation shaft is located between the second surface of the first reflection plate and the second surface of the second reflection plate.

It may be understood that, the second reflection plate is set to be rotatably connected to the rotation shaft, so that an angle between the first reflection plate and the second reflection plate can be adjusted. In this way, the first radiator disposed on the first reflection plate and the second radiator disposed on the second reflection plate can radiate antenna signals in different directions, or receive antenna signals in different directions, so as to implement adjustment of an antenna beam radiation direction of the base station antenna.

In addition, the rotation shaft is disposed between the second surface of the first reflection plate and the second surface of the second reflection plate. When the second reflection plate rotates relative to the rotation shaft, a non-side position (for example, the middle) of the second reflection plate may rotate around the rotation shaft. A rotation amplitude of the second reflection plate is small, and the second reflection plate occupies small internal space of the base station antenna, thereby facilitating miniaturization of the base station antenna.

In addition, compared with a solution in which the first reflection plate and the second reflection plate are arranged "side by side", this implementation in which the first reflection plate and the second reflection plate may be arranged at an angle can further reduce occupation of internal space of the base station antenna and facilitate miniaturization of the base station antenna.

In an implementation, the base station antenna includes a third reflection plate and a third radiator. The third reflection plate includes a first surface and a second surface that are disposed in opposite directions, and the third radiator is disposed on the first surface of the third reflection plate. The third reflection plate is rotatably connected to the rotation shaft, and the second surface of the third reflection plate faces the rotation shaft.

It may be understood that, the third reflection plate and the third radiator are disposed, and the third reflection plate is rotatably connected to the rotation shaft, so that a quantity of channels of the base station antenna can be increased, and a radiation direction of the base station antenna can be added, expanding a radiation range and an antenna signal receiving range.

In addition, the second surface of the third reflection plate faces the rotation shaft. Therefore, when the third reflection plate rotates relative to the rotation shaft, a non-side position (for example, the middle part) of the third reflection plate may rotate around the rotation shaft. A rotation amplitude of the second reflection plate is small, and the second reflection plate occupies small internal space of the base station antenna, thereby facilitating miniaturization of the base station antenna.

In addition, compared with a solution in which the first reflection plate, the second reflection plate, and the third reflection plate are arranged "side by side", this implementation in which the third reflection plate can be arranged at an angle with each of the first reflection plate and the second reflection plate can further reduce occupation of internal space of the base station antenna and facilitate miniaturization of the base station antenna.

In an implementation, the base station antenna further includes a fastening piece, and the first reflection plate is fastened to the rotation shaft by using the fastening piece. It may be understood that, disposing the fastening piece can reduce the difficulty of assembling the first reflection plate and the rotation shaft.

In an implementation, the fastening piece includes a first connecting piece and a second connecting piece that are detachably connected, the first connecting piece and the second connecting piece are fastened to the rotation shaft, and the first connecting piece is fastened to the first reflection plate. It may be understood that, in this implementation, disassembly and assembly of the fastening piece are relatively simple, and it may be easier to assemble the first reflection plate and the rotation shaft.

In an implementation, the first connecting piece includes a first part, a second part, a third part, a fourth part, and a fifth part that are sequentially connected, and the first part, the second part, the fourth part, and the fifth part are all located on a same side of the third part. The second part is bent relative to the third part, the first part is bent relative to the second part, the fourth part is bent relative to the third part, and the fifth part is bent relative to the fourth part. The first part and the fifth part are fastened to the first reflection plate, and the third part and the first connecting piece are fastened to the rotation shaft in a clamping manner.

In an implementation, the base station antenna further includes a rotation support, and the second reflection plate is rotatably connected to the rotation shaft through the rotation support.

It may be understood that, the rotation support is disposed, so that the second reflection plate can be rotatably connected to the rotation shaft, and the difficulty of assembling the second reflection plate and the rotation shaft can be reduced.

In an implementation, the rotation support includes a connecting part and a bearing part, and the bearing part is connected to the connecting part. The second reflection plate is fastened to the connecting part, and the bearing part is fastened to the rotation shaft. The rotation support in this implementation has a relatively simple structure and is easy to implement.

In an implementation, the base station antenna further includes a first handle, the first handle is fastened to the second reflection plate, and the first handle is used to pull the second reflection plate to rotate relative to the rotation shaft.

It may be understood that, the first handle is disposed to be fastened to the second reflection plate, so that the first handle can pull the second reflection plate to rotate relative to the rotation shaft, thereby implementing adjustment of an orientation of the second reflection plate. In addition, compared with a solution in which the second reflection plate is driven to rotate by using a driving mechanism, this implementation has a simple structure and lower costs.

In an implementation, the base station antenna includes a second handle, the second handle is fastened to the third reflection plate, and the second handle is used to pull the third reflection plate to rotate relative to the rotation shaft.

It may be understood that, the second handle is disposed to be fastened to the third reflection plate, so that the second handle can pull the third reflection plate to rotate relative to the rotation shaft, thereby implementing adjustment of an orientation of the third reflection plate. In addition, compared with a solution in which the third reflection plate is driven to rotate by using a driving mechanism, this implementation has a simple structure and lower costs.

In an implementation, the base station antenna further includes a first transfer board, the first transfer board includes a first board component and a second board component, the second board component is connected to the first board component, and the second board component is bent relative to the first board component. The first board component is fastened to the second reflection plate, and the first handle is fastened to the second board component.

It may be understood that, the first transfer board is disposed, the first board component of the first transfer board is fastened to the second reflection plate, and the second board component is fastened to the first handle, so that the first handle can pull the second reflection plate to rotate relative to the rotation shaft through the first transfer board, and the difficulty in assembling the first handle and the second reflection plate can be reduced.

In an implementation, the first transfer board and the second reflection plate may alternatively be an integrally formed structure.

In an implementation, the base station antenna further includes a nut, and the nut is fastened to the second board component. The first handle includes a first segment, a second segment, and a third segment that are connected in sequence, and both the first segment and the third segment are provided with threads. The first segment and the second segment pass through the nut, and the third segment is threadedly connected to the nut.

It may be understood that, the nut is disposed to be fastened to the second board component, and the first segment and the third segment of the first handle are provided with threads. In this way, when the first handle does not need to pull the second reflection plate to rotate relative to the rotation shaft, the first handle may be tightly screwed on the nut, and the connection of the first handle is more stable. When the first handle needs to pull the second reflection plate to rotate relative to the rotation shaft, the first handle is more likely to slide by loosening the first handle on the nut, and in a process in which the first handle pulls the second reflection plate to rotate relative to the rotation shaft, the first handle does not fall off from the second board component.

In an implementation, the first handle includes a gripping component and a fastening component, the gripping component is rotatably connected to the fastening component, and the fastening component is fastened to the second reflection plate. After a position of the second reflection plate relative to the rotation shaft is determined, the gripping component rotates to be in a bent state with the fastening component.

It may be understood that, the gripping component and the fastening component are provided, and when the first handle pulls the second reflection plate to rotate to a preset angle, the gripping component is rotated to be in a bent state with the fastening component. In this case, the first handle occupies less space, which is conducive to miniaturization of the base station antenna.

In an implementation, the base station antenna includes a connector and a cable, the connector is fastened to the first transfer board, one end of the cable is connected to the connector, and the other end is connected to the second reflection plate.

It may be understood that, the connector is fastened on the first transfer board, so that when the second reflection plate rotates relative to the rotation shaft, the connector and the cable may also rotate as the second reflection plate rotates relative to the rotation shaft. In this way, in a process in which the second reflection plate rotates relative to the rotation shaft, a position of the cable may be adjusted in real time, so as to effectively restrict motion space of the cable, thereby preventing breakage and avoiding entanglement of the cable.

In an implementation, the base station antenna includes a radome, the radome includes an upper-end cover, a lower-end cover, and an enclosure frame, and the upper-end cover and the lower-end cover are respectively installed at two ends of the enclosure frame. One end of the rotation shaft is fastened to the upper-end cover, and the other end is fastened to the lower-end cover. A portion of the first handle passes through the lower-end cover from the outside of the radome and enters the inside of the radome, and is fastened to the second reflection plate. It may be understood that the rotation shaft, the reflection plate, the radiator, and the like are disposed inside the radome, so that these components are not easily affected by an external environment.

In an implementation, the base station antenna includes a connector, a cable, and an adjustment mechanism. Both the connector and the adjustment mechanism are fastened to the lower-end cover. One end of the cable is connected to the connector, and the other end passes through the adjustment mechanism and is connected to the second reflection plate. The adjustment mechanism is configured to adjust the position of the cable when the second reflection plate rotates relative to the rotation shaft.

It may be understood that, the adjustment mechanism is disposed, so that in a process in which the second reflection plate rotates relative to the rotation shaft, a position of the cable inside the base station antenna may be adjusted, motion space of the cable is effectively restricted, and a function of preventing breakage and avoiding entanglement of the cable is achieved.

In an implementation, the adjustment mechanism includes a support block and a sliding ring, where the sliding ring is slidably and rotatably connected to the support block. The support block is fastened on the lower-end cover, and the other end of the cable passes through the sliding ring and is connected to the second reflection plate.

In an implementation, the support block is provided with a chute, the chute includes first space and second space, the second space is in communication with the first space, and a hole diameter of the first space is greater than a hole diameter of the second space. The sliding ring includes a sliding part, one portion of the sliding part is spherical, and the other portion is non-spherical. The spherical portion of the sliding part is located in the first space, and the non-spherical portion of the sliding part is located in the second space. In this way, the sliding part may slide and rotate in the chute, and does not fall off from the second space of the chute.

In an implementation, the lower-end cover is provided with a first sliding slot. The base station antenna further includes a sliding block, where the sliding block is located inside the base station antenna, and the sliding block covers the first sliding slot. A portion of the first handle passes through the first sliding slot and the sliding block from the outside of the radome and enters the inside of the radome, and is fastened to the second reflection plate.

It may be understood that, the first sliding slot is disposed, and a portion of the first handle passes through the first sliding slot and the sliding block from the outside of the radome and enters the inside of the radome. In this way, the first sliding slot may provide avoidance space for the first handle, so as to avoid interference between the first handle and the lower-end cover when the first handle rotates relative to the rotation shaft.

In addition, the sliding block is disposed to cover the first sliding slot, so that the sliding block always covers the first sliding slot during rotation of the first handle, so as to prevent rainwater or dust from entering the interior of the base station antenna from the first sliding slot.

According to a second aspect, this application provides a base station, where the base station includes a radio frequency processing unit and the base station antenna in the first aspect, and the radio frequency processing unit is electrically connected to the base station antenna.

It may be understood that the base station in this implementation can be miniaturized when antenna signals can be radiated in different directions and antenna beam directions can be adjusted.

In an implementation, there are a plurality of base station antennas, and the base station antennas specifically include a first base station antenna, a second base station antenna, and a third base station antenna. A first surface of a first reflection plate of the first base station antenna faces in the same direction as a first surface of a second reflection plate of the second base station antenna, a first surface of a second reflection plate of the first base station antenna faces in the same direction as a first surface of a first reflection plate of the third base station antenna, and a first surface of a first reflection plate of the second base station antenna faces in the same direction as a first surface of a second reflection plate of the third base station antenna.

It may be understood that, the first surface of the first reflection plate of the first base station antenna and the first surface of the second reflection plate of the second base station antenna are set to face in the same direction, so that a first radiator of the first base station antenna and a second radiator of the second base station antenna form multi-channel networking. Similarly, a second radiator of the first base station antenna and a first radiator of the third base station antenna may also form multi-channel networking. A first radiator of the second base station antenna and a second radiator of the third base station antenna may also form multi-channel networking. In this way, in the base station, each of the first base station antenna, the second base station antenna, and the third base station antenna can be miniaturized, and the first base station antenna, the second base station antenna, and the third base station antenna, as a whole, can further implement multi-channel networking.

### BRIEF DESCRIPTION OF DRAWINGS

FIG. 1 is a diagram of a system architecture to which an embodiment of this application is applicable;
FIG. 2 is a diagram of a structure of a base station according to an embodiment of this application;
FIG. 3 is a diagram of a structure of a base station antenna according to an embodiment of this application;
FIG. 4 is a diagram of a structure of a base station in another implementation according to an embodiment of this application;
FIG. 5 is a diagram of a structure of a base station antenna shown in FIG. 4;
FIG. 6 is a partial exploded view of the base station antenna shown in FIG. 5 in an implementation;
FIG. 7 is a partial sectional view of the base station antenna shown in FIG. 5 at A-A in an implementation;
FIG. 8 is a diagram of a structure of the partial base station antenna shown in FIG. 7 at a different angle;
FIG. 9 is a partial sectional view of the base station antenna shown in FIG. 5 at A-A;
FIG. 10 is an enlarged diagram of the partial base station antenna shown in FIG. 9 at B;
FIG. 11 is a partial sectional view of the base station antenna shown in FIG. 5 at A-A;
FIG. 12 is an enlarged diagram of the partial base station antenna shown in FIG. 11 at C;
FIG. 13A is a partial sectional view of the base station antenna shown in FIG. 5 at A-A;
FIG. 13B is a diagram of a structure of a lower part of the base station antenna shown in FIG. 13A;
FIG. 14 is a partial exploded view of a first handle shown in FIG. 6;
FIG. 15A is a diagram of a structure of the lower part of the base station antenna shown in FIG. 13B at a different angle;
FIG. 15B is a diagram of a structure of the lower part of the base station antenna shown in FIG. 15A in a different state;
FIG. 16 is an enlarged diagram of the partial base station antenna shown in FIG. 13B at D;
FIG. 17 is a sectional view of the base station antenna shown in FIG. 5 at a different angle;
FIG. 18 is a diagram of a structure of an adjustment mechanism shown in FIG. 17;
FIG. 19 is a partial exploded view of the adjustment mechanism shown in FIG. 18;
FIG. 20 is a diagram of a partial structure of the base station antenna shown in FIG. 5 in another implementation;
FIG. 21 is an enlarged diagram of the base station antenna shown in FIG. 20 at E;
FIG. 22 is a diagram of a structure of the partial base station antenna shown in FIG. 21 at a different angle;
FIG. 23 is an enlarged diagram of the partial base station antenna shown in FIG. 21 at F;
FIG. 24 is a diagram of a partial structure of the base station antenna shown in FIG. 5 in another implementation;
FIG. 25 is a diagram of a partial structure of the base station antenna shown in FIG. 24;
FIG. 26 is a diagram of a structure of the partial base station antenna shown in FIG. 25 at another angle; and
FIG. 27 is a diagram of a structure of the partial base station antenna shown in FIG. 25 at another angle.

### DESCRIPTION OF EMBODIMENTS

To facilitate understanding of an antenna structure provided in embodiments of this application, related terms used in this application are explained.

It should be understood that an electrical connection includes a direct connection and a coupled connection. The coupled connection may be a phenomenon that two or more circuit elements or electrical networks closely cooperate with and affect each other in input and output, so that energy is transmitted from one side to another side through interaction. The direct connection may be a form in which components are physically in contact and are electrically connected, or may be a form in which different components in a line structure are connected through a physical line that can transmit electrical signals, for example, a printed circuit board (printed circuit board, PCB) copper foil or a wire.

Transmission line: The transmission line may be considered as a wire used by a system to transmit an electrical signal. In the field of electromagnetics, the term of transmission line is generally used to represent two or more parallel wires that are very close to each other.

Antenna signal channel: In a base station antenna, a component or a component combination having a function of separating different received signals to implement signal processing and measurement is referred to as an antenna signal channel. Generally, a dual-polarized single-band base station antenna has two channels.

Clamp: A clamp is a connection apparatus for connecting grooved pipes, valves, and pipeline accessories.

In addition, in descriptions of embodiments of this application, it should be understood that, unless otherwise specified or limited expressly, the term "connection" should be understood in a broad sense. For example, the term "connection" may be a detachable connection or a nondetachable connection, or may be a direct connection or an indirect connection by using an intermediate medium. "Connection" may include "fixed connection", "rotatable connection", and "slidable connection". "Fixed connection" means that two parts are connected to each other and a relative position relationship remains unchanged after the two parts are connected. "Rotatable connection" means that two parts are connected to each other and can rotate relative to each other after the two parts are connected to each other. "Slidable connection" means that two parts are connected to each other and can slide relative to each other after the two parts are connected to each other.

The following describes embodiments of this application with reference to the accompanying drawings in embodiments of this application.

In the descriptions of embodiments of this application, "a plurality of" means two or more. Orientation terms mentioned in embodiments of this application, for example, "up", "middle", "down", "bottom", and "side", are merely directions with reference to the accompanying drawings. Therefore, the orientation terms are used to better and more clearly describe and understand embodiments of this application, instead of indicating or implying that a specified apparatus or element should have a specific orientation, and be constructed and operated in the specific orientation. Therefore, this cannot be understood as a limitation on embodiments of this application.

In addition, in the embodiments of this application, mathematical concepts such as parallel, perpendicular, and the like are mentioned. These limitations are all for the current process level, but not for an absolute strict definition in the mathematical sense. A small deviation is allowed, which can be approximately parallel or perpendicular. For example, that A is parallel to B means that A is parallel or approximately parallel to B, and an included angle of 0 degrees to 10 degrees between A and B is allowed. For example, that A is perpendicular to B means that A is perpendicular or approximately perpendicular to B, and an included angle of 80 degrees to 100 degrees between A and B is allowed.

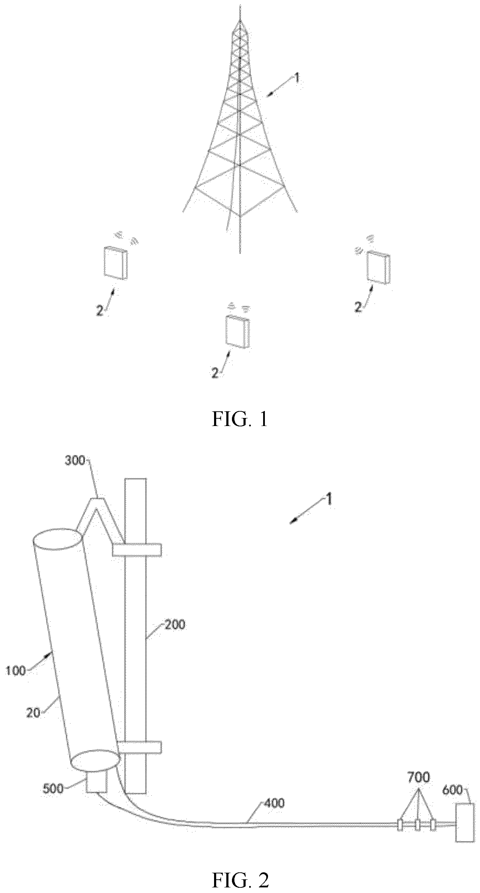

FIG. 1 is a diagram of a system architecture to which an embodiment of this application is applicable. As shown in FIG. 1, the system architecture may include a base station 1 and a terminal 2. Wireless communication may be implemented between the base station 1 and the terminal 2. The base station 1 may also be referred to as an access network device, may be located in a base station subsystem (base station subsystem, BBS), a terrestrial radio access network (UMTS terrestrial radio access network, UTRAN), or an evolved terrestrial radio access network (evolved universal terrestrial radio access network, E-UTRAN), and is configured to perform cell coverage of a signal to implement communication between a terminal device and a wireless network. Specifically, the base station 1 may be a base transceiver station (base transceiver station, BTS) in a global system for mobile communications (global system for mobile communications, GSM) or a code division multiple access (code division multiple access, CDMA) system, may be a NodeB (NodeB, NB) in a wideband code division multiple access (wideband code division multiple access, WCDMA) system, may be an evolved NodeB (evolved NodeB, eNB or eNodeB) in a long term evolution (long term evolution, LTE) system, or may be a radio controller in a cloud radio access network (cloud radio access network, CRAN) scenario. Alternatively, the base station 1 may be a relay station, an access point, a vehicle-mounted device, a wearable device, a gNode (gNodeB or gNB) in a new radio (new radio, NR) system, an access network device in a future evolved network, or the like. This is not limited in this embodiment of this application.

The base station 1 is equipped with a base station antenna to implement signal transmission in space. FIG. 2 is a diagram of a structure of a base station 1 according to an embodiment of this application. FIG. 2 shows structures such as a base station antenna 100, a pole 200, and an antenna support 300. The base station antenna 100 includes a radome 20. The radome 20 has a good electromagnetic wave penetration characteristic in terms of electrical performance, and can withstand impact of an external harsh environment in terms of mechanical performance, so that the radome can protect an antenna system from being affected by an external environment. The radome 20 may be installed on the pole 200 or a tower (not shown in the figure) by using the antenna support 300, so that the base station antenna 100 receives or transmits a signal.

In addition, the base station 1 may further include a radio frequency processing unit 500, a baseband processing unit 600, and a grounding apparatus 700. As shown in FIG. 2, the baseband processing unit 600 may be connected to the base station antenna 100 via the radio frequency processing unit 500. In some embodiments, the radio frequency processing unit 500 may also be referred to as a remote radio unit (remote radio unit, RRU), and the baseband processing unit 600 may also be referred to as a baseband unit (baseband unit, BBU).

In a possible embodiment, as shown in FIG. 2, the radio frequency processing unit 500 and the base station antenna 100 may be integrally disposed, and the baseband processing unit 600 is located at a remote end of the base station antenna 100. In this case, the radio frequency processing unit 500 and the base station antenna 100 may be collectively referred to as an active antenna unit (active antenna unit, AAU). It should be noted that FIG. 2 is merely an example of a location relationship between the radio frequency processing unit 500 and the base station antenna 100. In some other embodiments, both the radio frequency processing unit 500 and the baseband processing unit 600 may alternatively be located at a remote end of the base station antenna 100. The radio frequency processing unit 500 and the baseband processing unit 600 may be connected through a transmission line 400. The transmission line 400 is grounded by using the grounding apparatus 700.

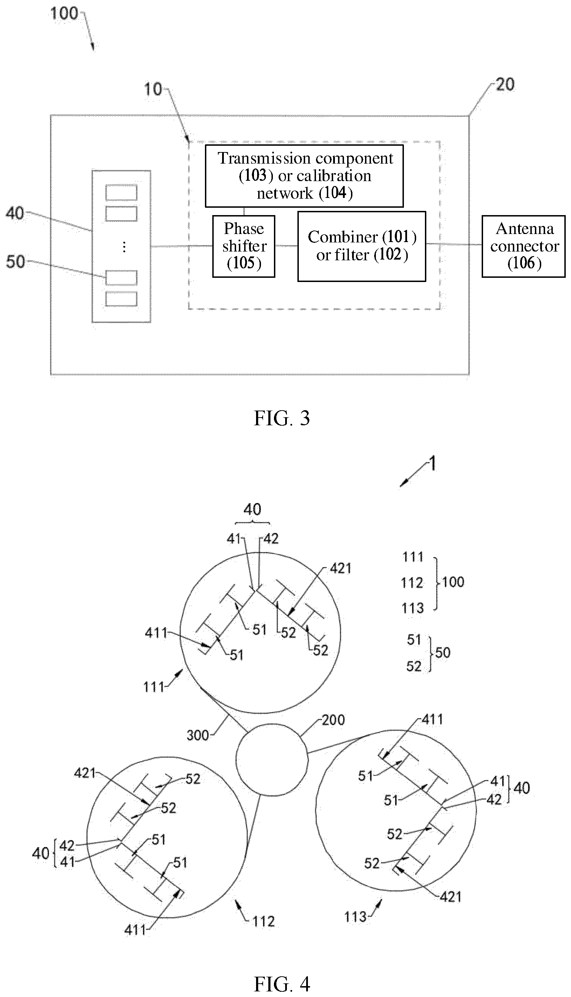

Further, FIG. 3 is a diagram of a structure of a base station antenna 100 according to an embodiment of this application. As shown in FIG. 3, the base station antenna 100 may include a reflection plate 40 and a radiator 50. The radiator 50 may also be referred to as an antenna element, an oscillator, or the like. The radiator 50 is a unit that forms a basic structure of an antenna array, and can effectively radiate or receive an antenna signal. Frequencies of different radiators 50 may be the same or different. The reflection plate 40 may also be referred to as a baseplate, an antenna panel, a metal reflective surface, or the like. The reflection plate 40 may reflect and aggregate received signals on a reception point. The radiator 50 is usually placed on a side of the reflection plate 40. This may not only greatly enhance a signal receiving or transmitting capability, but also block and shield an interference signal from a back side of the reflection plate 40 (where the back side of the reflection plate 40 in this application is a side that faces away from the side that is of the reflection plate 40 and on which the radiator 50 is disposed).

In the base station antenna 100, a feeding network 10 may be located between the radiator 50 and a power amplifier of a radio frequency processing unit 500. The feeding network 10 may provide specific power and a specific phase for the radiator 50. For example, the feeding network 10 includes a combiner 101, configured to split one channel of signals into a plurality of channels of signals or combine a plurality of channels of signals into one channel of signals. The feeding network 10 may further include a filter 102, configured to filter out an interference signal. For a remote electrical tilt antenna, the feeding network 10 may further include a transmission component 103 to implement different radiation beam directions, or be connected by using a calibration network 104, to obtain a calibration signal required by a system. In addition, the feeding network 10 may further include a phase shifter 105 to change a maximum direction of signal radiation. In some cases, the phase shifter 105 further has a function of the combiner 101. In this case, the combiner 101 may be omitted in the feeding network 10. Different components included in the feeding network 10 may be connected to each other through a transmission line 400 and an antenna connector 106. In the base station antenna 100, the antenna connector 106 may implement signal connection between the inside and the outside of the base station antenna 100. It should be noted that the connection relationship between the different components mentioned above is not unique. FIG. 3 shows only one possible location relationship and connection manner of the components. In another implementation, the feeding network 10 may replace the combiner 101 with a power divider.

The foregoing specifically describes structures of the antenna system, the base station 1, and the base station antenna 100 in an implementation with reference to the accompanying drawings. A structure of the base station 1 in another implementation is further described in detail below with reference to a related accompanying drawing.

FIG. 4 is a diagram of a structure of the base station 1 in the another implementation according to an embodiment of this application. The base station 1 includes a base station antenna 100, a pole 200, and an antenna support 300. For a manner of disposing the pole 200 and the antenna support 300, refer to the manner of disposing the pole 200 and the antenna support 300 in the implementation shown in FIG. 2. In addition, the base station 1 in this implementation may also include the transmission line 400, the radio frequency processing unit 500, the baseband processing unit 600, and the grounding apparatus 700 in the implementation shown in FIG. 2. Specifically, technical content that is the same as the foregoing is not described herein again.

The base station 1 may include one or more base station antennas. As shown in FIG. 4, in some implementations, the base station 1 includes a plurality of base station antennas, and specifically includes a first base station antenna 111, a second base station antenna 112, and a third base station antenna 113. The first base station antenna 111, the second base station antenna 112, and the third base station antenna 113 each may be fastened to a support structure such as the pole 200 or a tower (not shown in the figure) through an antenna support 300. The first base station antenna 111, the second base station antenna 112, and the third base station antenna 113 may cooperate with each other to implement multi-channel networking. It may be understood that a quantity of base station antennas 100 is not limited to three shown in FIG. 4, for example, a fourth base station antenna (not shown in the figure), a fifth base station antenna (not shown in the figure), and the like may be further included.

As shown in FIG. 4, the first base station antenna 111, the second base station antenna 112, and the third base station antenna 113 each include a first reflection plate 41, a second reflection plate 42, a first radiator 51, and a second radiator 52. The first radiator 51 is disposed on a first surface 411 of the first reflection plate 41. The second radiator 52 is disposed on a first surface 421 of the second reflection plate 42.

For example, the first surface 411 of the first reflection plate 41 and the first surface 421 of the second reflection plate 42 face in different directions. In this way, the first radiator 51 and the second radiator 52 can implement antenna signal radiation in different directions, or receive antenna signals in different directions.

For example, the first surface 411 of the first reflection plate 41 of the first base station antenna 111 and the first surface 421 of the second reflection plate 42 of the second base station antenna 112 face in a same direction. In this way, the first radiator 51 of the first base station antenna 111 and the second radiator 52 of the second base station antenna 112 may be configured to form multi-channel networking. For example, the first radiator 51 of the first base station antenna 111 may implement four-channel (4T, four channels) networking. The second radiator 52 of the second base station antenna 112 may implement 4T networking. In this way, the first radiator 51 of the first base station antenna 111 and the second radiator 52 of the second base station antenna 112 may form eight-channel (8T, eight channels) networking. For example, the first radiator 51 of the first base station antenna 111 and the second radiator 52 of the second base station antenna 112 may form 8T networking in a Sub 1G (less than 1 GHz, for example, 800 M) frequency band scenario.

In addition, the first surface 421 of the second reflection plate 42 of the first base station antenna 111 and the first surface 411 of the first reflection plate 41 of the third base station antenna 113 face in a same direction. In this way, the second radiator 52 of the first base station antenna 111 and the first radiator 51 of the third base station antenna 113 may be configured to form multi-channel networking. It may be understood that, for the channel networking manner, refer to the multi-channel networking manner of the first radiator 51 of the first base station antenna 111 and the second radiator 52 of the second base station antenna 112. Details are not described herein again. In addition, the first surface 411 of the first reflection plate 41 of the second base station antenna 112 and the first surface 421 of the second reflection plate 42 of the third base station antenna 113 face in a same direction. In this way, the first radiator 51 of the second base station antenna 112 and the second radiator 52 of the third base station antenna 113 may be configured to form multi-channel networking. It may be understood that, for the channel networking manner, refer to the multi-channel networking manner of the first radiator 51 of the first base station antenna 111 and the second radiator 52 of the second base station antenna 112. Details are not described herein again.

It may be understood that, in a solution, the first reflection plate 41 and the second reflection plate 42 of the base station antenna 100 are set to face in a same direction. In this case, the first reflection plate 41 and the second reflection plate 42 may be roughly in a same plane. In this way, the first reflection plate 41 and the second reflection plate 42 occupy large space of the base station antenna 100, which is not conducive to miniaturization of the base station antenna 100. However, in this implementation, in a base station antenna 100, a radiation direction of the first radiator 51 and a radiation direction of the second radiator 52 are set to be different, so that when the first reflection plate 41 and the second reflection plate 42 are disposed, the first reflection plate 41 and the second reflection plate 42 may face in different directions, that is, the first reflection plate 41 and the second reflection plate 42 may be disposed at a specific angle. In this way, the first reflection plate 41 and the second reflection plate 42 occupy smaller space of the base station antenna 100, which is conducive to miniaturization of the base station antenna 100. In addition, in two adj acent base station antennas 100, radiation directions of two radiators in the two base station antennas 100 are set to be the same (for example, radiation directions of the first radiator 51 of the first base station antenna 111 and the second radiator 52 of the second base station antenna 112 are the same), which helps the base station antennas 100 implement multi-channel networking. Therefore, the base station 1 in this implementation can reconcile multi-channel networking and miniaturization.

It may be understood that, to implement working in a Sub 1G (for example, 800 M) frequency band scenario, a size of a conventional radiator needs to be relatively large. In this way, an area of a reflection plate also needs to be correspondingly larger. In addition, multi-channel networking is required in a Sub 1G (for example, 800 M) frequency band scenario. In this case, a larger quantity of conventional radiators are required. In this way, more reflection plates are required. In addition, to implement multi-channel networking (for example, 8T networking) in different directions in a Sub 1G (for example, 800 M) frequency band scenario, sizes and a quantity of radiators required by a conventional base station antenna further increase. Therefore, areas and a quantity of reflection plates also need to be further increased accordingly. In this way, a small-sized base station antenna cannot accommodate radiators 50 required for multi-channel networking (for example, 8T networking) in different directions in a Sub 1G (for example, 800 M) frequency band scenario. Consequently, a conventional base station cannot implement 8T networking in different directions in a Sub 1G frequency band scenario. However, in this implementation, because the base station 1 can reconcile multi-channel networking and miniaturization, the base station 1 can implement multi-channel networking (for example, 8T networking) in different directions in a Sub 1G (for example, 800 M) frequency band scenario.

The following describes several implementations of the structure of the base station antenna 100 in detail with reference to related accompanying drawings.

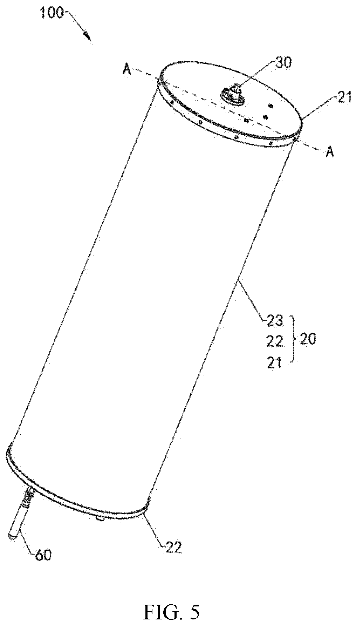

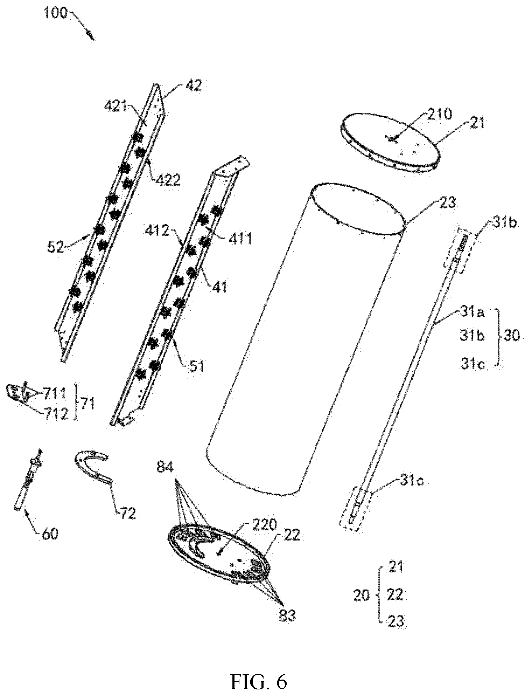

FIG. 5 is a diagram of a structure of the base station antenna 100 shown in FIG. 4. FIG. 6 is a partial exploded view of the base station antenna 100 shown in FIG. 5 in an implementation.

As shown in FIG. 5 and FIG. 6, the base station antenna 100 includes a radome 20, a rotation shaft 30, a first reflection plate 41, a second reflection plate 42, a first radiator 51, a second radiator 52, and a first handle 60.

For example, the radome 20 includes an upper-end cover 21, a lower-end cover 22, and an enclosure frame 23. The enclosure frame 23 may be in a cylindrical shape. The upper-end cover 21 and the lower-end cover 22 are respectively installed at two ends of the enclosure frame 23. The upper-end cover 21, the lower-end cover 22, and the enclosure frame 23 may enclose the inside of the radome 20, that is, the inside of the base station antenna 100. The inside of the radome 20 may be used to dispose the first reflection plate 41, the second reflection plate 42, the first radiator 51, the second radiator 52, and the like. In another implementation, the enclosure frame 23 may alternatively be in another shape, for example, a square or an ellipse.

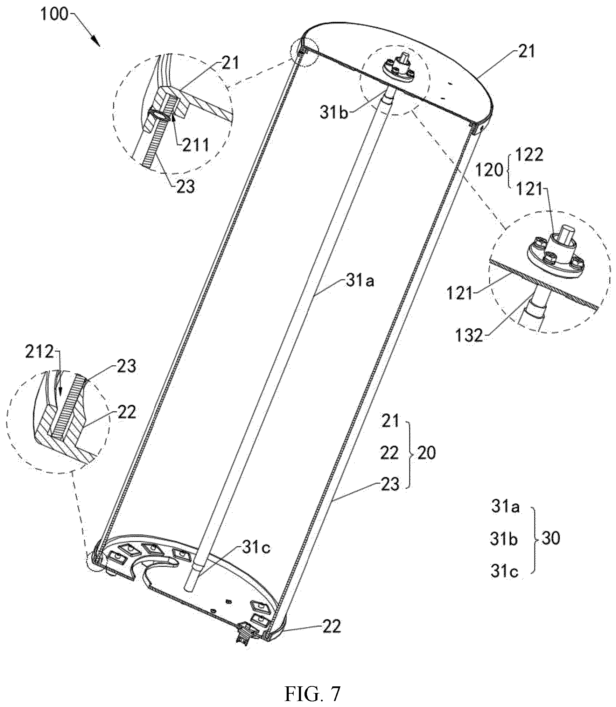

FIG. 7 is a partial sectional view of the base station antenna 100 shown in FIG. 5 at A-A in an implementation.

As shown in FIG. 6 and FIG. 7, a limiting groove 211 is disposed on a peripheral side wall of the upper-end cover 21. A first end part of the enclosure frame 23 may be inserted into the limiting groove 211 of the upper-end cover 21. For example, the first end part of the enclosure frame 23 may be in interference coordination with the limiting groove 211 of the upper-end cover 21.

In an implementation, the enclosure frame 23 and the upper-end cover 21 may alternatively be fastened by using a fastener (a screw, a pin, or the like). In this way, the connection between the enclosure frame 23 and the upper-end cover 21 is more stable. In another implementation, the enclosure frame 23 and the upper-end cover 21 may alternatively be an integrally formed mechanical part.

As shown in FIG. 6 and FIG. 7, a limiting groove 212 is also disposed on a peripheral side wall of the lower-end cover 22. A second end part of the enclosure frame 23 may be inserted into the limiting groove 212 of the lower-end cover 22. For example, the second end part of the enclosure frame 23 may be in interference coordination with the limiting groove 212 of the lower-end cover 22.

In an implementation, the enclosure frame 23 and the lower-end cover 22 may alternatively be fastened by using a fastener (a screw, a pin, or the like). In this way, the connection between the enclosure frame 23 and the lower-end cover 22 is more stable. In another implementation, the enclosure frame 23 and the lower-end cover 22 may alternatively be an integrally formed mechanical part.

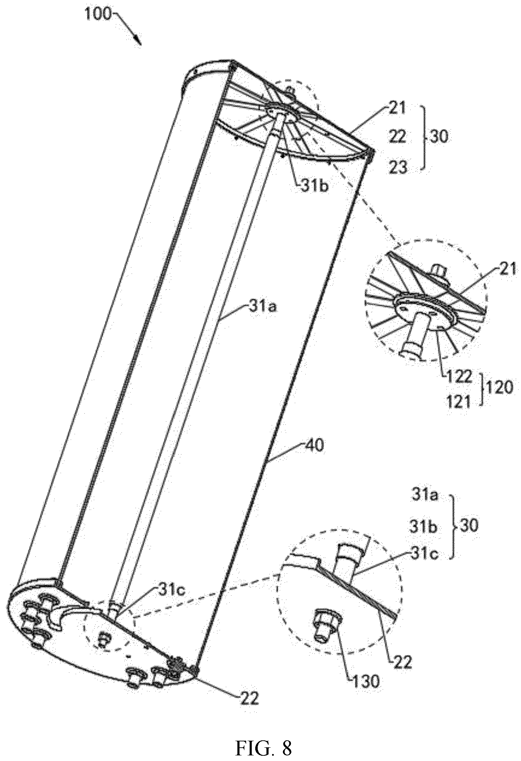

FIG. 8 is a diagram of a structure of the partial base station antenna 100 shown in FIG. 7 at a different angle.

As shown in FIG. 7 and FIG. 8, the rotation shaft 30 is fastened to the upper-end cover 21 and the lower-end cover 22.

For example, the upper-end cover 21 is provided with a first through hole 210 (FIG. 6 shows the first through hole 210). The first through hole 210 connects the inside and the outside of the radome 20. The first through hole 210 may be located at a central position of the upper-end cover 21. The lower-end cover 22 is provided with a second through hole 220 (FIG. 6 shows the second through hole 220). The second through hole 220 may be located at a central position of the lower-end cover 22. The second through hole 220 connects the inside and the outside of the radome 20.

For example, a middle part 31a of the rotation shaft 30 may be located inside the radome 20. A first end part 31b of the rotation shaft 30 passes through the first through hole 210 from the inside of the radome 20 to the outside of the radome 20. A second end part 31c of the rotation shaft 30 passes through the second through hole 220 from the inside of the radome 20 to the outside of the radome 20. The base station antenna 100 further includes a first locking piece 120 and a second locking piece 130 (for example, nuts). The first locking piece 120 locks the first end part 31b of the rotation shaft 30. The second locking piece 130 locks the second end part 31c of the rotation shaft 30.

For example, the first locking piece 120 includes a first locking part 121 and a second locking part 122. The first locking part 121 and the second locking part 122 are respectively located on two sides of the upper-end cover 21. The first locking part 121 is located outside the radome 20, and the second locking part 122 is located inside the radome 20. The first locking part 121 and the second locking part 122 each are provided with a through hole. The first end part 31b of the rotation shaft 30 passes through the through holes of the second locking part 122 and the first locking part 121 from the inside of the radome 20 to the outside of the radome 20. The through hole of the second locking part 122 may clamp the first end part 31b of the rotation shaft 30, to limit rotation of the rotation shaft 30 relative to the radome 20. For example, a shape (for example, a non-circular shape such as an elliptical shape or a stadium shape) of the through hole of the second locking part 122 may be set. In this way, when the rotation shaft 30 passes through the through hole of the second locking part 122, the rotation shaft 30 is not easy to rotate relatively due to a limitation of the shape.

In addition, the first locking part 121 and the second locking part 122 may be locked on the first end part 31b of the rotation shaft 30 by using fasteners (for example, screws), to limit movement of the rotation shaft 30 relative to the first through hole 210. The second locking piece 130 locks the second end part 31c of the rotation shaft 30, to limit movement of the rotation shaft 30 relative to the second through hole 220. In this way, the rotation shaft 30 can be fastened to the upper-end cover 21 and the lower-end cover 22 stably.

It may be understood that, in this implementation, an installation sequence of the rotation shaft 30 and the radome 20 is not specifically limited. For example, the enclosure frame 23 may be first fastened to the upper-end cover 21. Then, the lower-end cover 22 is fastened to the second end part 31c of the rotation shaft 30. Finally, the lower-end cover 22 is fastened to the enclosure frame 23, and the first end part 31b of the rotation shaft 30 is fastened to the upper-end cover 21. An assembly process in this implementation is relatively simple.

As shown in FIG. 6, the first reflection plate 41 has a first surface 411 and a second surface 412 that are disposed in opposite directions. The opposite directions may be different directions. The first radiator 51 may be disposed on the first surface 411 of the first reflection plate 41.

For example, there may be a plurality of first radiators 51. The plurality of first radiators 51 may be arranged in a matrix, for example, arranged in six rows and two columns shown in FIG. 6. In an implementation, first radiators 51 in one column may implement two-channel (2T, two channels) networking. In this way, the first radiators 51 of the first reflection plate 41 can implement 4T networking.

It may be understood that the first radiators 51 may be fastened on the first reflection plate 41 in a manner of welding, clamping, or bonding.

As shown in FIG. 6, the second reflection plate 42 has a first surface 421 and a second surface 422 that are disposed in opposite directions. The second radiator 52 may be disposed on the first surface 421 of the second reflection plate 42. For both a disposing manner of the second radiator 52 and a connection manner of the second radiator 52, refer to the disposing manner of the first radiator 51 and the connection manner of the first radiator 51. Details are not described herein again.

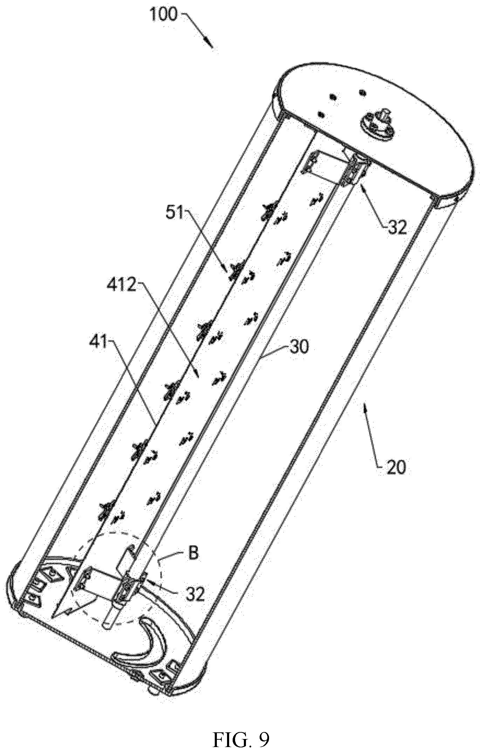

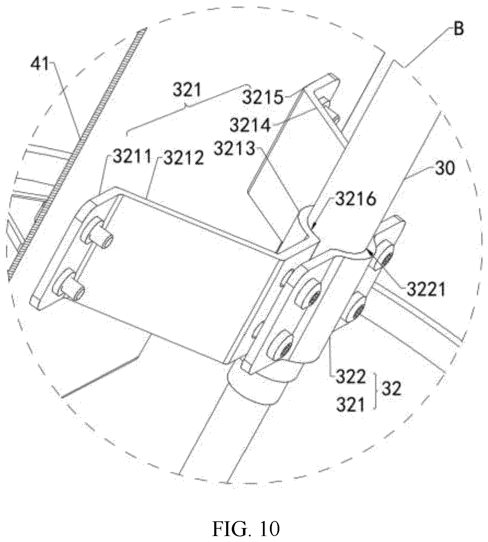

FIG. 9 is a partial sectional view of the base station antenna 100 shown in FIG. 5 at A-A. For example, FIG. 10 is a structural diagram of assembling the radome 20, the rotation shaft 30, the first reflection plate 41, the first radiator 51, and the like.

As shown in FIG. 9, the first reflection plate 41 is connected to the rotation shaft 30. The second surface 412 of the first reflection plate 41 is disposed opposite to the rotation shaft 30. It may be understood that the first reflection plate 41 may be fastened to the rotation shaft 30. The first reflection plate 41 may alternatively be rotatably connected to the rotation shaft 30. The following uses an example in which the first reflection plate 41 is fastened to the rotation shaft 30 for description.

For example, the base station antenna 100 further includes a fastening piece 32. The first reflection plate 41 is fastened to the rotation shaft 30 through the fastening piece 32. It may be understood that there are two fastening pieces 32. A first end part of the first reflection plate 41 may be fastened on the rotation shaft 30 through one of the fastening pieces 32. A second end part of the first reflection plate 41 may be fastened on the rotation shaft 30 through the other fastening piece 32. In this way, the connection between the first reflection plate 41 and the rotation shaft 30 is more stable. The following uses one of the fastening pieces 32 as an example for description.

FIG. 10 is an enlarged diagram of the partial base station antenna 100 shown in FIG. 9 at B.

As shown in FIG. 10, the fastening piece 32 includes a first connecting piece 321 and a second connecting piece 322. The second connecting piece 322 is detachably connected to the first connecting piece 321. The first connecting piece 321 includes a first part 3211, a second part 3212, a third part 3213, a fourth part 3214, and a fifth part 3215 that are connected in sequence. That is, the second part 3212 is connected between the first part 3211 and the third part 3213, the third part 3213 is connected between the second part 3212 and the fourth part 3214, and the fourth part 3214 is connected between the third part 3213 and the fifth part 3215.

For example, the first part 3211, the second part 3212, the fourth part 3214, and the fifth part 3215 each are in a shape of a flat plate. The third part 3213 is partially recessed inward to form a first arc-shaped groove 3216.

The second part 3212 and the first part 3211 form a first angle. The first angle is within a range of 90° to 180°. The second part 3212 and the third part 3213 form a second angle. The second angle is within a range of 90° to 180°. It may be understood that, for a disposing manner of the fourth part 3214 and the third part 3213, refer to the disposing manner of the second part 3212 and the third part 3213. For a disposing manner of the fourth part 3214 and the fifth part 3215, refer to the disposing manner of the second part 3212 and the first part 3211. Details are not described herein again.

As shown in FIG. 10, a middle part of the second connecting piece 322 is recessed inward to form a second arc-shaped groove 3221. Two ends of the second connecting piece 322 each are provided with a fastening hole. In this case, a plurality of fastening holes are located on two sides of the second arc-shaped groove 3221.

As shown in FIG. 10, the first part 3211 and the fifth part 3215 of the first connecting piece 321 are fastened at different positions of the first reflection plate 41. For example, a first fastener (such as a screw or a pin) passes through the first reflection plate 41 and the first part 3211 of the first connecting piece 321 in sequence, so that the first reflection plate 41 is fastened to the first part 3211 of the first connecting piece 321. In addition, a second fastener (such as a screw or a pin) passes through the first reflection plate 41 and the fifth part 3215 of the first connecting piece 321 in sequence, so that the first reflection plate 41 is fastened to the fifth part 3215 of the first connecting piece 321. In this way, the first reflection plate 41 can be stably connected to the first connecting piece 321 through the first fastener and the second fastener. In other implementations, the first reflection plate 41 may alternatively be connected to the first connecting piece 321 in other manners (for example, welding or bonding).

As shown in FIG. 10, the rotation shaft 30 is wrapped in the first arc-shaped groove 3216 of the third part 3213 of the first connecting piece 321 and the second arc-shaped groove 3221 of the second connecting piece 322. In addition, a fastener (for example, a screw or a pin) may pass through the second connecting piece 322 and the third part 3213 of the first connecting piece 321 in sequence. In this way, the first connecting piece 321 and the second connecting piece 322 may be stably connected to the rotation shaft 30. In this case, the first reflection plate 41 may be stably connected to the rotation shaft 30 by using the first connecting piece 321 and the second connecting piece 322, that is, the first connecting piece 321 and the third part 3213 of the second connecting piece 322 are fastened to the rotation shaft 30 in a clamping manner. In another implementation, the first connecting piece 321 and the second connecting piece 322 may alternatively be connected to the rotation shaft 30 in another manner (for example, welding or bonding).

For example, a projection of the rotation shaft 30 on the first reflection plate 41 is located in the middle of the first reflection plate 41, that is, the rotation shaft 30 is disposed opposite to the middle of the first reflection plate 41.

In another implementation, the first connecting piece 321 may alternatively be fastened to the rotation shaft 30 by using another structure together with the second connecting piece 322 in a clamping manner. The structure of the first connecting piece 321 is not specifically limited in this application.

It may be understood that, the foregoing describes a manner of connecting the first reflection plate 41 to the rotation shaft 30 with reference to related accompanying drawings. In another implementation, the first reflection plate 41 may alternatively be fastened to the rotation shaft 30 in another connection manner (for example, welding or bonding).

In addition, one end of the first reflection plate 41 is fastened to the upper-end cover 21, and the other end is fastened to the lower-end cover 22. In this way, the connection between the first reflection plate 41 and the radome 20 is more stable, that is, the first reflection plate 41 does not easily shake, which helps improve stability of signal radiation by the first radiator 51 disposed on the first reflection plate 41.

For example, one end of the first reflection plate 41 may be fastened to the upper-end cover 21 by using a fastener (for example, a screw), and the other end may also be fastened to the lower-end cover 22 by using a fastener (for example, a screw). It may be understood that this installation manner is relatively simple and easy to operate. In another implementation, the first reflection plate 41 may alternatively be connected to the upper-end cover 21 and the lower-end cover 22 in another connection manner (for example, clamping or tenon-and-mortise connection).

In another implementation, when the first reflection plate 41 is fastened to the rotation shaft 30, the first reflection plate 41 may not be fastened to the upper-end cover 21 and the lower-end cover 22.

In another implementation, when the first reflection plate 41 is fastened to the upper-end cover 21 and the lower-end cover 22, the first reflection plate 41 may not be fastened to the rotation shaft 30.

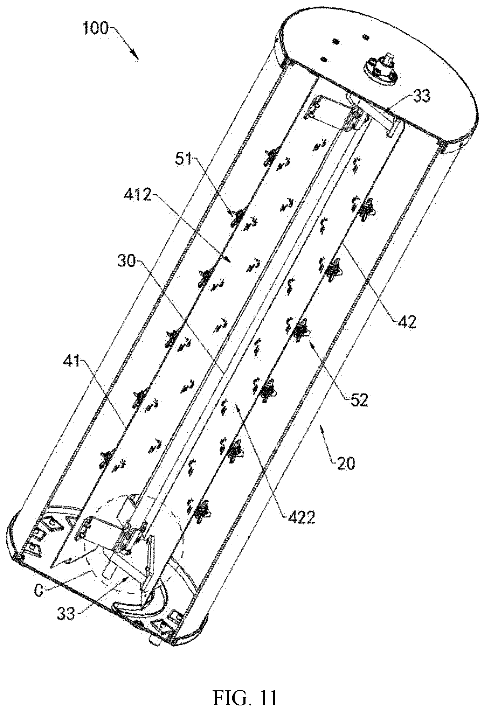

FIG. 11 is a partial sectional view of the base station antenna 100 shown in FIG. 5 at A-A. For example, FIG. 11 is a structural diagram of assembling the radome 20, the rotation shaft 30, the first reflection plate 41, the first radiator 51, the second reflection plate 42, the second radiator 52, and the like.

As shown in FIG. 11, the second reflection plate 42 is rotatably connected to the rotation shaft 30. The second surface 422 of the second reflection plate 42 is disposed opposite to the rotation shaft 30. In this case, the rotation shaft 30 is located between the second surface 412 of the first reflection plate 41 and the second surface 422 of the second reflection plate 42.

For example, the base station antenna 100 further includes a first rotation support 33. The second reflection plate 42 is rotatably connected to the rotation shaft 30 through the first rotation support 33. It may be understood that there are two first rotation supports 33. A first end part of the second reflection plate 42 may be connected to the rotation shaft 30 through one of the first rotation supports 33. A second end part of the second reflection plate 42 may be connected to the rotation shaft 30 through the other first rotation support 33. In this way, the connection between the second reflection plate 42 and the rotation shaft 30 is more stable. The following uses one of the first rotation supports 33 as an example for description.

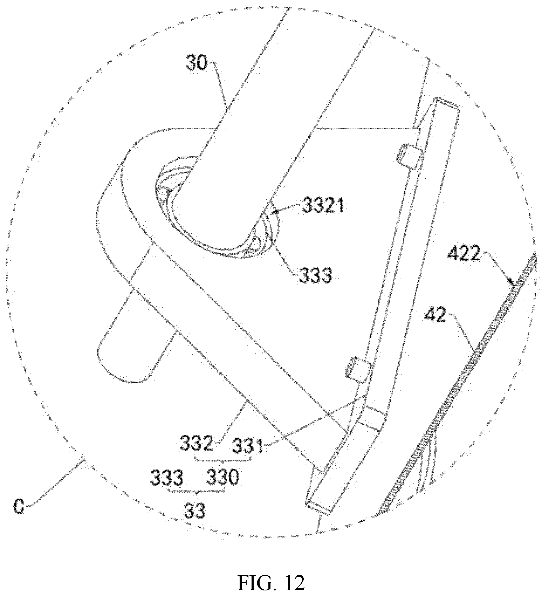

FIG. 12 is an enlarged diagram of the partial base station antenna 100 shown in FIG. 11 at C. To clearly show the connection between the first rotation support 33 and the rotation shaft 30, the first reflection plate 41 and the fastening piece 32 are hidden in FIG. 12.

As shown in FIG. 12, the first rotation support 33 includes a connecting part 330 and a bearing part 333 (also referred to as a bearing 333). The connecting part 330 includes a first connecting part 331 and a second connecting part 332.

For example, the first connecting part 331 may be in a shape of a flat plate. The first connecting part 331 is provided with a fastening hole. A fastener (for example, a screw or a pin) passes through the second reflection plate 42 and the first connecting part 331 in sequence, so that the second reflection plate 42 is fastened to the first connecting part 331. In this way, the second reflection plate 42 can be stably connected to the first connecting part 331 through the fastener. In another implementation, the second reflection plate 42 may alternatively be connected to the first connecting part 331 in another manner (for example, welding or bonding).

For example, the second connecting part 332 is connected to one side of the first connecting part 331. The second connecting part 332 may also be roughly plate-shaped. The second connecting part 332 is provided with a through hole 3321. The through hole 3321 may penetrate an upper surface and a lower surface of the second connecting part 332.

In addition, the bearing part 333 is connected to the second connecting part 332 and disposed in the through hole 3321. The bearing 333 may be fastened on a hole wall of the through hole 3321 through bonding, welding, or the like.

As shown in FIG. 11 and FIG. 12, the rotation shaft 30 passes through the bearing 333. In this way, the second connecting part 332 may be rotatably connected to the rotation shaft 30 through the bearing 333, that is, the second connecting part 332 may rotate relative to the rotation shaft 30. For example, the rotation shaft 30 may be in interference coordination with an inner hole of the bearing 333, to prevent the first rotation support 33 from sliding along an extension direction of the rotation shaft 30.

In another implementation, the bearing 333 may alternatively adopt another form such as a shaft sleeve or a tube, to enable the second reflection plate 42 to be rotatably connected to the rotation shaft 30.

In another implementation, the first rotation support 33 may not include the first connecting part 331. In this case, the fastener passes through the second reflection plate 42 and the second connecting part 332 of the first rotation support 33 in sequence, so that the second reflection plate 42 is fastened to the first rotation support 33.

It may be understood that, in this implementation, because the second reflection plate 42 is fastened to the first connecting part 331, the second connecting part 332 is connected to the first connecting part 331, and the second connecting part 332 is rotatably connected to the rotation shaft 30 through the bearing part 333, the second reflection plate 42 may be rotatably connected to the rotation shaft 30 through the first rotation support 33. In addition, the first reflection plate 41 is fastened to the rotation shaft 30. In this way, when the second reflection plate 42 rotates relative to the rotation shaft 30, an angle between the second reflection plate 42 and the first reflection plate 41 can be adjusted. The first radiator 51 disposed on the first reflection plate 41 and the second radiator 52 disposed on the second reflection plate 42 can radiate antenna signals in different directions, or receive antenna signals in different directions, so as to implement adjustment of an antenna beam radiation direction of the base station antenna 100. For example, the angle between the second reflection plate 42 and the first reflection plate 41 is in a range of 0° to 120°. For example, the angle between the second reflection plate 42 and the first reflection plate 41 may be 60°, 90°, 120°, or the like.

As shown in FIG. 12, a projection of the rotation shaft 30 on the second reflection plate 42 is located in the middle of the second reflection plate 42, that is, the rotation shaft 30 is disposed opposite to the middle of the second reflection plate 42.

It may be understood that, in a solution, side portions of the first reflection plate 41 and the second reflection plate 42 are hinged with each other. In this way, when the first reflection plate 41 and the second reflection plate 42 rotate relative to each other, rotation amplitudes of the first reflection plate 41 and the second reflection plate 42 are relatively large (that is, an effect of "large-scale opening and large-scale closing" is presented). In this case, the first reflection plate 41 and the second reflection plate 42 need to occupy large internal space of the radome 20 of the base station antenna 100. Consequently, it is difficult to implement miniaturization of the base station antenna 100. However, in this implementation, the rotation shaft 30 is disposed to be located between the second surface 412 of the first reflection plate 41 and the second surface 422 of the second reflection plate 42. Therefore, when the second reflection plate 42 rotates relative to the rotation shaft 30, a non-side position (for example, the middle) of the second reflection plate 42 may rotate around the rotation shaft 30, a rotation amplitude of the second reflection plate 42 is small, and the second reflection plate 42 occupies small internal space of the radome 20, thereby facilitating miniaturization of the base station antenna 100.

Particularly, when the angle between the first reflection plate 41 and the second reflection plate 42 is 0°, the first reflection plate 41 and the second reflection plate 42 may be disposed in parallel. In this way, in a direction from the first reflection plate 41 to the second reflection plate 42, the first reflection plate 41 and the second reflection plate 42 have a relatively large overlapping region, and the first reflection plate 41 and the second reflection plate 42 occupy small internal space of the radome 20 of the base station antenna 100, thereby facilitating miniaturization of the base station antenna 100.

It may be understood that, the foregoing describes a manner of connecting the second reflection plate 42 to the rotation shaft 30 with reference to related accompanying drawings. In another implementation, the second reflection plate 42 may alternatively be rotatably connected to the rotation shaft 30 by using another rotating mechanism (for example, a gear group).

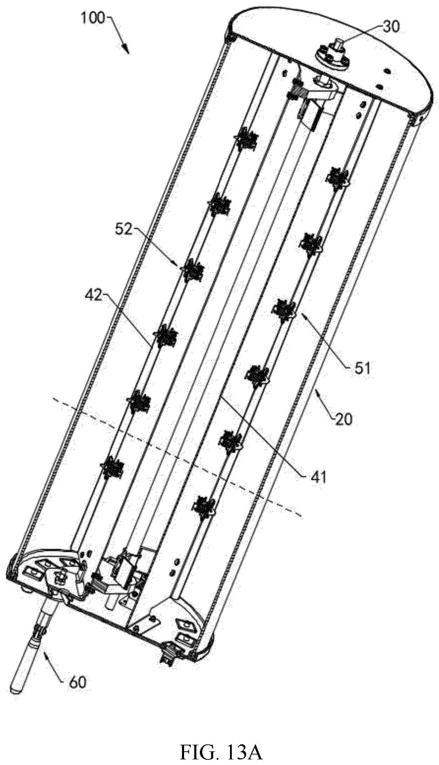

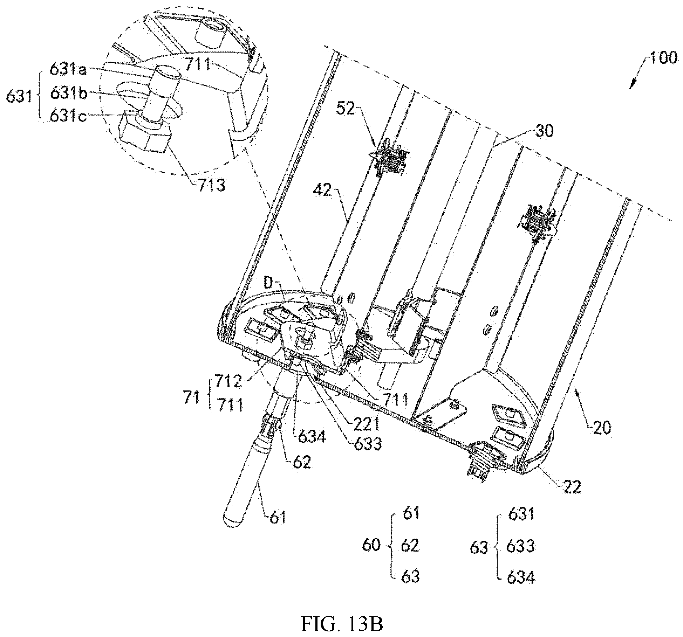

FIG. 13A is a partial sectional view of the base station antenna 100 shown in FIG. 5 at A-A. FIG. 13B is a diagram of a structure of a lower part of the base station antenna 100 shown in FIG. 13A. For example, FIG. 13A and FIG. 13B are structural diagrams of assembling the radome 20, the rotation shaft 30, the first reflection plate 41, the first radiator 51, the second reflection plate 42, the second radiator 52, the first handle 60, and the like. In FIG. 13A, an upper part and a lower part of the base station antenna 100 are schematically distinguished by using a dashed line.

As shown in FIG. 13B, the base station antenna 100 further includes a first transfer board 71 (FIG. 6 also shows the first transfer board 71). The first transfer board 71 includes a first board component 711 and a second board component 712. The second board component 712 is connected to the first board component 711. The second board component 712 is bent relative to the first board component 711. For example, an angle between the first board component 711 and the second board component 712 is within a range of 80° to 120°.

As shown in FIG. 13B, the first board component 711 of the first transfer board 71 is fastened to the second reflection plate 42. For example, a fastener (a screw, a pin, or the like) passes through the first board component 711 of the first transfer board 71 and the second reflection plate 42, so that the second reflection plate 42 is fastened to the first transfer board 71. In another implementation, the first board component 711 of the first transfer board 71 may alternatively be fastened to the second reflection plate 42 through welding or bonding.

In addition, the second board component 712 of the first transfer board 71 and the lower-end cover 22 are opposite to each other and are arranged at an interval, that is, there is space between the second board component 712 of the first transfer board 71 and the lower-end cover 22.

In another implementation, a structure of the first transfer board 71 is not specifically limited. The first transfer board 71 and the second reflection plate 42 may alternatively be integrally formed.

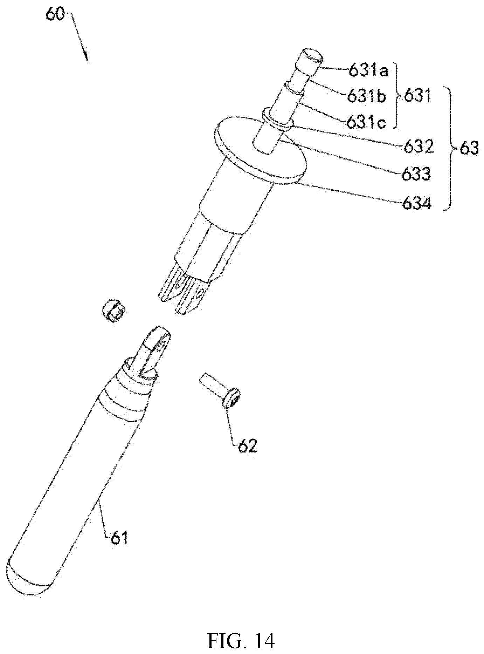

FIG. 14 is a partial exploded view of the first handle 60 shown in FIG. 6.

As shown in FIG. 14, the first handle 60 includes a gripping component 61 (also referred to as a lever), a pin shaft 62, and a fastening component 63. The fastening component 63 is rotatably connected to the gripping component 61 through the pin shaft 62. The first handle 60 includes a working state, an intermediate state, and a non-working state. When the first handle 60 is in the working state, the gripping component 61 rotates to be approximately in a vertical state with the fastening component 63. When the first handle 60 is in a non-working state, the gripping component 61 rotates to be approximately perpendicular to the fastening component 63. The intermediate state of the first handle 60 is any state between the working state and the non-working state of the first handle 60.

It may be understood that, when the first handle 60 is in the non-working state, the gripping component 61 is rotated to be approximately perpendicular to the fastening component 63, so that space occupied by the first handle 60 can be reduced, thereby implementing miniaturization of the base station antenna 100.

For example, the fastening component 63 includes a first connecting part 631, a first limiting part 632, a second connecting part 633, and a second limiting part 634. The first connecting part 631 is an end part of the fastening component 63 of the first handle 60 that is away from the gripping component 61. The first limiting part 632 is connected between the first connecting part 631 and the second connecting part 633. The second connecting part 633 is connected between the first limiting part 632 and the second limiting part 634. A diameter of the first limiting part 632 is greater than diameters of the first connecting part 631 and the second connecting part 633. A diameter of the second limiting part 634 is greater than the diameter of the first limiting part 632. In an implementation, the first limiting part 632 and the second limiting part 634 each may be in a disc shape.

For example, an end part (that is, the first connecting part 631) of the first handle 60 includes a first segment 631a, a second segment 631b, and a third segment 631c that are sequentially connected. That is, the second segment 631b is connected between the first segment 631a and the third segment 631c. The third segment 631c is connected between the second segment 631b and the first limiting part 632. The first segment 631a and the third segment 631c are provided with threads. The second segment 631b may be provided with no thread, or may be provided with a thread.

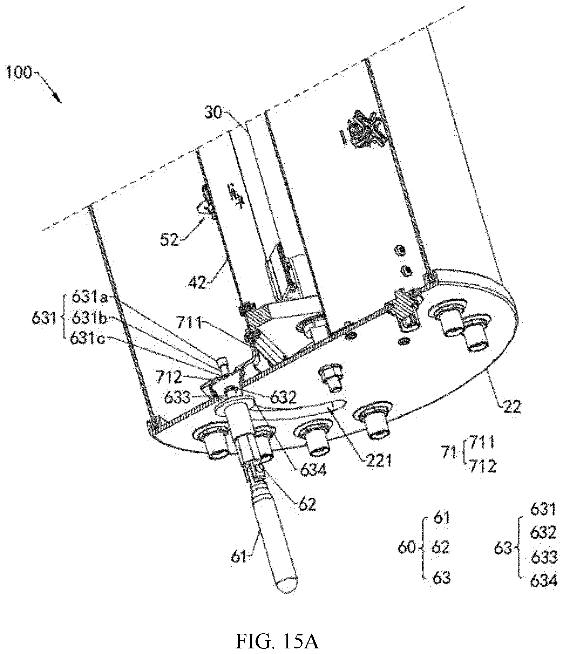

FIG. 15A is a diagram of a structure of the lower part of the base station antenna shown in FIG. 13B at a different angle.

As shown in FIG. 13B, FIG. 14, and FIG. 15A, the first handle 60 is fastened to the first transfer board 71.

For example, the lower-end cover 22 is provided with a first sliding slot 221 (FIG. 6 also shows the first sliding slot 221). The first sliding slot 221 may be an arc-shaped slot with the rotation shaft 30 as a circle center.

For example, the first connecting part 631 of the first handle 60 sequentially passes through the first sliding slot 221 of the lower-end cover 22 and the first transfer board 71 from the outside of the base station antenna 100, enters the inside of the base station antenna 100, and is fastened to the second board component 712 of the first transfer board 71. In this case, the first handle 60 is fastened to the second reflection plate 42 through the first transfer board 71.

It may be understood that, because the second reflection plate 42 is rotatably connected to the rotation shaft 30, the first transfer board 71 is fastened to the second reflection plate 42, and the first handle 60 is fastened to the first transfer board 71, when the second reflection plate 42 rotates relative to the rotation shaft 30, the first transfer board 71 and the first handle 60 also rotate relative to the rotation shaft 30. In this way, the first sliding slot 221 may provide avoidance space for the first handle 60, that is, avoid interference between the first handle 60 and the lower-end cover 22 when the first handle 60 rotates relative to the rotation shaft 30. In addition, the first sliding slot 221 may be further used to limit a movement trajectory of the first handle 60.

As shown in FIG. 13B, the base station antenna 100 further includes a nut 713, and the nut 713 is fixedly connected on an upper surface of the second board component 712 of the first transfer board 71. In a process in which the first handle 60 is fastened to the second board component 712 of the first transfer board 71, the first segment 631a of the first handle 60 rotatably passes through the nut 713 through thread engagement, the second segment 631b may directly pass through the nut 713, and the third segment 631c is screwed tightly and fastened on the nut 713 through thread engagement, that is, is threadedly connected to the nut 713. In this way, the first handle 60 may be fastened on the first transfer board 71.

In another implementation, a manner of connecting the first handle 60 and the first transfer board 71 is not specifically limited. For example, a threaded hole is disposed on the first transfer board 71. The first connecting part 331 of the first handle 60 is provided with an external thread. The first connecting part 331 of the first handle 60 is threadedly connected to the first transfer board 71.

As shown in FIG. 15A, when the first handle 60 does not need to pull the second reflection plate 42 to rotate relative to the rotation shaft 30, the first handle 60 is tightly screwed on the nut 713. In this case, the second limiting part 634 of the first handle 60 may abut against a lower surface of the lower-end cover 22. In this way, the connection between the first handle 60 and the lower-end cover 22 is more stable, that is, the first handle 60 does not easily shake relative to the lower-end cover 22. In addition, when the first handle 60 needs to pull the second reflection plate 42 to rotate relative to the rotation shaft 30, the first handle 60 is loosened on the nut 713. In this case, the second limiting part 634 of the first handle 60 and the lower surface of the lower-end cover 22 are in a loose state. In this way, the first handle 60 is more likely to slide relative to the lower-end cover 22.

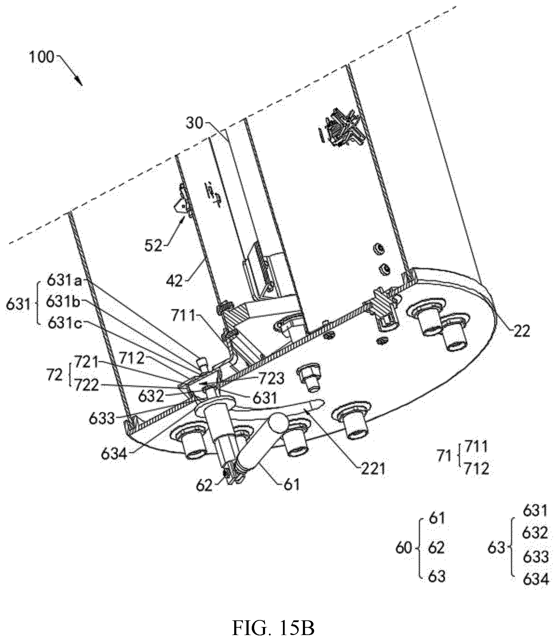

FIG. 15B is a diagram of a structure of the lower part of the base station antenna shown in FIG. 15A in a different state.

As shown in FIG. 15B, when the second reflection plate 42 rotates at a preset angle, the gripping component 61 is rotated to be approximately perpendicular to the fastening component 63 (that is, in a bent state). In this case, the first handle 60 occupies relatively small space, which facilitates miniaturization of the base station antenna 100.

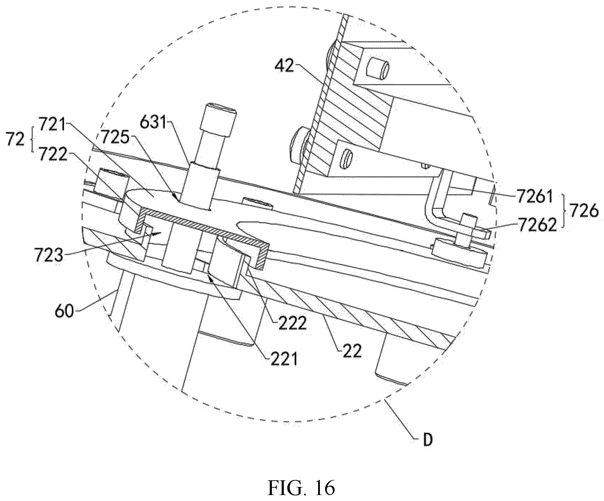

FIG. 16 is an enlarged diagram of the partial base station antenna 100 shown in FIG. 13B at D. To clearly show a connection between a sliding block 72 and the lower-end cover 22, FIG. 16 shows the base station antenna 100 from a different angle, and hides the first transfer board 71.

As shown in FIG. 16, the base station antenna 100 further includes the sliding block 72 (the sliding block 72 is also shown in FIG. 6). The sliding block 72 includes a bottom part 721 and a peripheral part 722. The peripheral part 722 is connected to the bottom part 721. The peripheral part 722 and the bottom part 721 enclose a groove 723.

For example, a through hole 725 is disposed on the bottom part 721 of the sliding block 72. The through hole 725 penetrates an upper surface and a lower surface of the bottom part 721.

As shown in FIG. 15B and FIG. 16, the sliding block 72 is located inside the base station antenna 100.

For example, the first connecting part 631 of the first handle 60 passes through the through hole 725 of the sliding block 72. The sliding block 72 is located between the first limiting part 632 of the first handle 60 and the second board component 712 of the first transfer board 71. It may be understood that, when the first handle 60 pulls the second reflection plate 42 to rotate relative to the rotation shaft 30, the first handle 60 may drive the sliding block 72 to rotate relative to the rotation shaft 30.

For example, when the first handle 60 does not need to pull the second reflection plate 42 to rotate relative to the rotation shaft 30, the first handle 60 is screwed tightly on the nut 713. In this case, the sliding block 72 may be squeezed between the first limiting part 632 of the first handle 60 and the first transfer board 71.

In another implementation, the first handle 60 may alternatively be fastened to the sliding block 72 in another manner (for example, welding or bonding). A manner of connecting the first handle 60 to the sliding block 72 is not specifically limited in this application.

As shown in FIG. 16, the sliding block 72 is slidably connected to the lower-end cover 22.

For example, the lower-end cover 22 includes a first flange 222. The first flange 222 is disposed around the first sliding slot 221. At least a portion of the first flange 222 may be located in the groove 723 of the sliding block 72. In this case, the bottom part 721 of the sliding block 72 covers the first sliding slot 221 of the lower-end cover 22. The first flange 222 of the lower-end cover 22 is disposed opposite to the peripheral part 722 of the sliding block 72. The first flange 222 of the lower-end cover 22 may slide in the groove 723.

It may be understood that the first flange 222 of the lower-end cover 22 has a guiding function for the sliding block 72, so that when the sliding block 72 rotates relative to the rotation shaft 30, the peripheral part 722 of the sliding block 72 may slide along the first flange 222. In this way, in a process in which the second reflection plate 42 rotates relative to the rotation shaft 30, the sliding block 72 covers a movement trajectory of the first handle 60 and extends over a specific distance. When the first handle 60 is rotated, the sliding block 72 is driven to rotate and cover a gap between the first handle 60 and the lower-end cover 22. That is, the sliding block 72 always covers the first sliding slot 221 of the lower-end cover 22, to prevent rainwater or dust from entering the interior of the base station antenna 100 from the first sliding slot 221.

In another implementation, a manner of connecting the sliding block 72 to the lower-end cover 22 is not specifically limited. For example, a groove is disposed on the first flange 222 of the lower-end cover 22. The peripheral part 722 of the sliding block 72 is located in the groove. In this case, the peripheral part 722 of the sliding block 72 may slide in the groove of the first flange 222 of the lower-end cover 22, to implement a slidable connection between the sliding block 72 and the lower-end cover 22.

As shown in FIG. 16, the sliding block 72 may be fastened to the second reflection plate 42. For example, the sliding block 72 may be fastened to the second reflection plate 42 through a connection block 726. The connection block 726 includes a first part 7261 and a second part 7262. The second part 7262 is connected to the first part 7261. The second part 7262 is bent relative to the first part 7261. For example, an angle between the first part 7261 and the second part 7262 is within a range of 80° to 120°. The first part 7261 may be locked on the second reflection plate 42 by using a first fastener (for example, a screw). The second part 7262 may be locked on the bottom part 721 of the sliding block 72 by using a second fastener (for example, a screw). In this way, when the first handle 60 drives the sliding block 72 to rotate relative to the rotation shaft 30, the sliding block 72 may drive the second reflection plate 42 to rotate around the rotation shaft 30.

It may be understood that, because the sliding block 72 is fastened to the second reflection plate 42, when the first handle 60 drives the sliding block 72 to rotate relative to the rotation shaft 30, the sliding block 72 may drive the second reflection plate to rotate relative to the rotation shaft 30, thereby adding a force-applying point and saving more effort for rotating the second reflection plate 42.

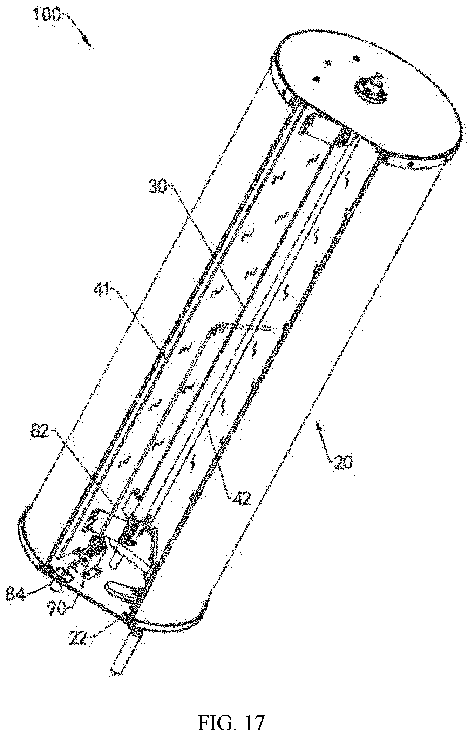

FIG. 17 is a sectional view of the base station antenna 100 shown in FIG. 5 at a different angle.

As shown in FIG. 17, the base station antenna 100 further includes a first cable 81 (not shown in the figure), a second cable 82, a first connector 83 (refer to FIG. 6), a second connector 84, and an adjustment mechanism 90. The first connector 83 and the second connector 84 may be used as the antenna connector 106 of the base station antenna 100 (refer to FIG. 3). It may be understood that there may be one or more first cables 81 and one or more second cables 82. In addition, there may be one or more first connectors 83 and one or more second connectors 84. A quantity of first cables 81 may be equal to a quantity of first connectors 83. A quantity of second cables 82 may be equal to a quantity of second connectors 84.

The first connector 83 is fastened on the lower-end cover 22. The first connector 83 may be disposed close to the first reflection plate 41. An input end of the first connector 83 may be located outside the radome 20, and an output end of the first connector 83 may be located inside the radome 20. The input end of the first connector 83 may be electrically connected to the transmission line 400 (refer to FIG. 2) of the base station 1.

The first cable 81 is located inside the radome 20. One end of the first cable 81 is electrically connected to the output end of the first connector 83, and the other end is electrically connected to the feeding network 10. In this way, the first cable 81 may receive a signal from the transmission line 400 (refer to FIG. 2) of the base station 1 through the first connector 83, and transmit the signal to the feeding network 10. The feeding network 10 then sends a radio frequency signal to the first radiator 51 on the first reflection plate 41, so that the first radiator 51 sends an antenna signal; or the feeding network 10 receives an antenna signal from the first radiator 51 on the first reflection plate 41.

The second connector 84 is fastened on the lower-end cover 22. The second connector 84 may be disposed close to the second reflection plate 42, and the second connector 84 and the first connector 83 are disposed at an interval. An input end of the second connector 84 may be located outside the radome 20, and an output end of the second connector 84 may be located inside the radome 20. The input end of the second connector 84 may be electrically connected to the transmission line 400 (refer to FIG. 2) of the base station 1. In addition, the second cable 82 is located inside the radome 20. One end of the second cable 82 is electrically connected to the output end of the second connector 84, and the other end is electrically connected to the feeding network 10. In this way, the second cable 82 may receive a signal from the transmission line 400 (refer to FIG. 2) of the base station 1 through the second connector 84, and transmit the signal to the feeding network 10. The feeding network 10 then sends a radio frequency signal to the second radiator 52 on the second reflection plate 42, so that the second radiator 52 sends an antenna signal; or the feeding network 10 receives an antenna signal from the second radiator 52 on the second reflection plate 42.

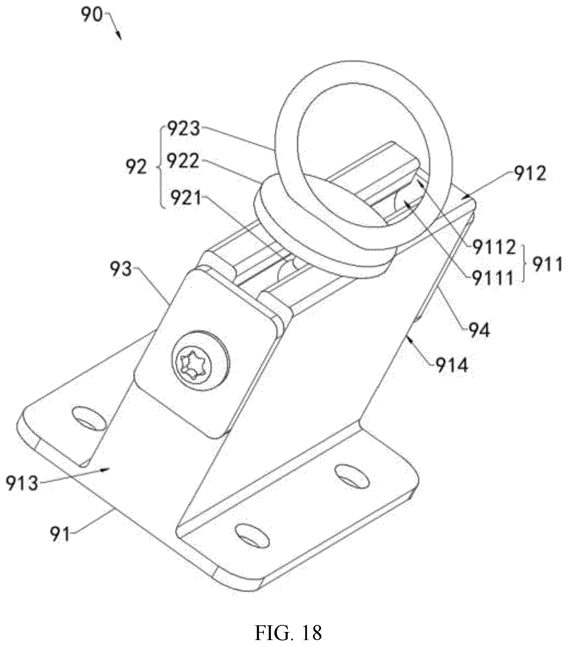

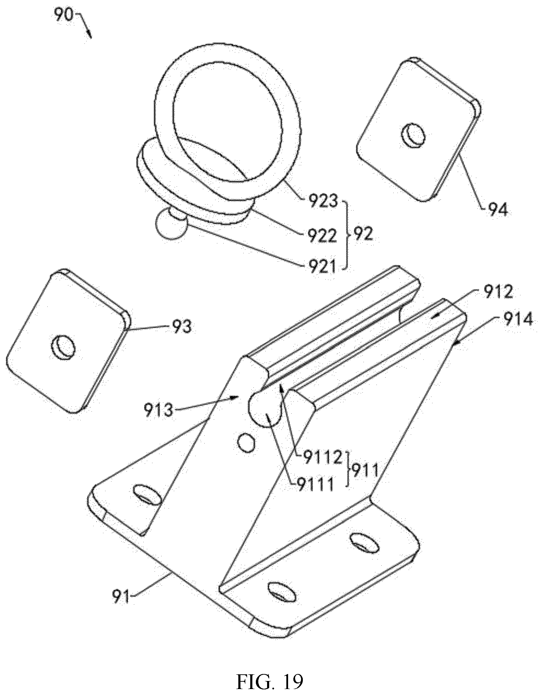

FIG. 18 is a diagram of a structure of the adjustment mechanism 90 shown in FIG. 17. FIG. 19 is a partial exploded view of the adjustment mechanism 90 shown in FIG. 18.

As shown in FIG. 18 and FIG. 19, the adjustment mechanism 90 includes a support block 91, a sliding ring 92, a first baffle 93, and a second baffle 94. For example, the support block 91, the sliding ring 92, the first baffle 93, and the second baffle 94 may all be non-metal mechanical parts. In this way, when the first radiator 51 and the second radiator 52 receive antenna signals or transmit antenna signals, the support block 91, the sliding ring 92, the first baffle 93, and the second baffle 94 may be prevented from affecting the first radiator 51 and the second radiator 52.

For example, the support block 91 is provided with a chute 911. An opening of the chute 911 may be located on an upper surface 912, a first side surface 913, and a second side surface 914 of the support block 91. The upper surface 912 of the support block 91 is connected to the first side surface 913 of the support block 91 and the second side surface 914 of the support block 91. In addition, the chute 911 includes first space 9111 and second space 9112. The second space 9112 is in communication with the first space 9111. An aperture of the first space 9111 is greater than an aperture of the second space 9112. In an implementation, the first space 9111 may be cylindrical. The second space 9112 may be in a cuboid shape. A diameter of the first space 9111 is greater than a width of the second space 9112.

For example, the sliding ring 92 includes a sliding part 921, a connecting part 922, and a limiting part 923. The connecting part 922 is connected between the sliding part 921 and the limiting part 923. One portion of the sliding part 921 may be spherical, and the other portion is non-spherical (for example, cylindrical). The limiting part 923 may be in a ring shape. It may be understood that the sliding ring 92 may be an integral mechanical part, that is, the sliding part 921, the connecting part 922, and the limiting part 923 are an integrally formed mechanical part. The sliding ring 92 may alternatively be a spliced mechanical part. For example, the sliding part 921, the connecting part 922, and the limiting part 923 may form an integral mechanical part in a splicing manner (for example, a tenon-and-mortise process) or a fastening manner (for example, a welding or bonding process). This is not specifically limited in this application.

As shown in FIG. 18 and FIG. 19, the sliding ring 92 is slidably and rotatably connected to the support block 91.

For example, the sliding part 921 of the sliding ring 92 is located in the chute 911 of the support block 91. Both the connecting part 922 and the limiting part 923 of the sliding ring 92 are located outside the chute 911. The connecting part 922 of the sliding ring 92 may be in contact with the upper surface 912 of the support block 91. It may be understood that the sliding part 921 of the sliding ring 92 may slide in the chute 911. In an implementation, the sliding part 921 of the sliding ring 92 may further rotate in the chute 911.

For example, the spherical portion of the sliding part 921 of the sliding ring 92 is located in the first space 9111 of the chute 911. The cylindrical portion of the sliding part 921 of the sliding ring 92 is located in the second space 9112 of the chute 911. Because the diameter of the first space 9111 is greater than the width of the second space 9112, the sliding ring 92 is not easily detached along a thickness direction.

In another implementation, structures of the sliding ring 92 and the chute 911 are not specifically limited.

As shown in FIG. 18 and FIG. 19, the first baffle 93 is fastened to the support block 91. The first baffle 93 is used to block an opening of the chute 911 on the first side surface 913. The second baffle 94 is fastened to the support block 91. The second baffle 94 is used to block an opening of the chute 911 on the second side surface 914. In this way, when the sliding ring 92 slides in the chute 911, the sliding ring 92 does not fall off from the opening of the chute 911 on the first side surface 913 and the opening of the chute 911 on the second side surface 914.

For example, the first baffle 93 may be fastened to the support block 91 by using a fastener. The second baffle 94 may also be fastened to the support block 91 by using a fastener.

As shown in FIG. 17 and FIG. 18, the adjustment mechanism 90 is located inside the radome 20. The support block 91 is fastened to the lower-end cover 22. For example, the support block 91 may be fastened to the lower-end cover 22 by using a fastener (for example, a screw or a pin).

In addition, a portion of the second cable 82 passes through the limiting part 923 of the sliding ring 92. In this way, when the second reflection plate 42 rotates relative to the rotation shaft, the second reflection plate 42 drives the second cable 82 to move. In this case, the second cable 82 may drive the sliding ring 92 to slide along the chute 911 of the support block 91, so as to adjust a position of the second cable 82. In addition, the sliding ring 92 may effectively restrict motion space of the second cable 82, and serve to prevent breakage and avoid entanglement of the second cable 82. In an implementation, when the second cable 82 drives the sliding ring 92 to slide along the chute 911 of the support block 91, the second cable 82 may also drive the sliding ring 92 to rotate relative to the support block 91, so as to better adjust the position of the second cable 82.

The foregoing specifically describes the base station antenna 100 with a structure with reference to related accompanying drawings. The following describes in detail a base station antenna with another structure with reference to related accompanying drawings. Technical content of the following implementation that is the same as that of the foregoing described implementation is not described again.

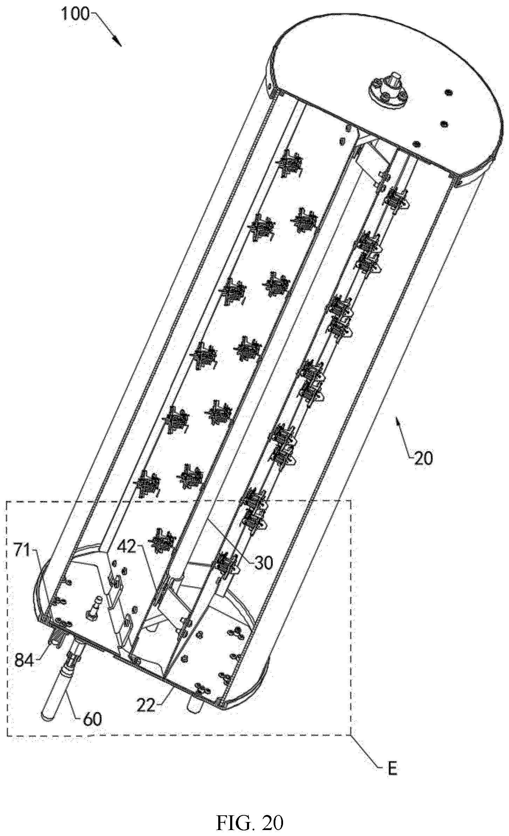

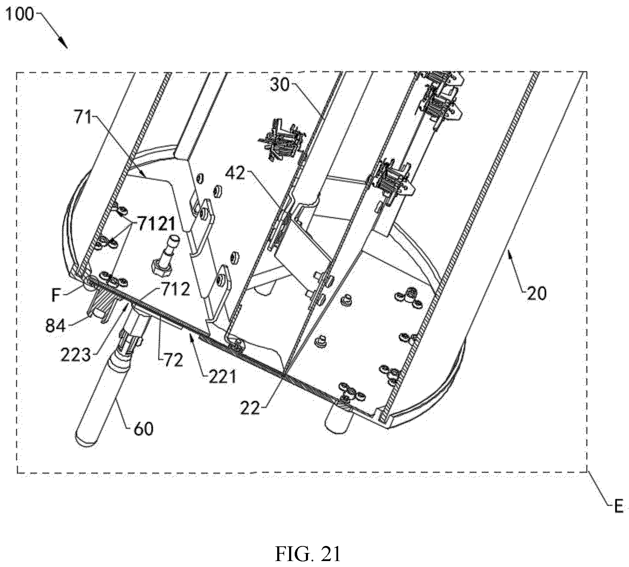

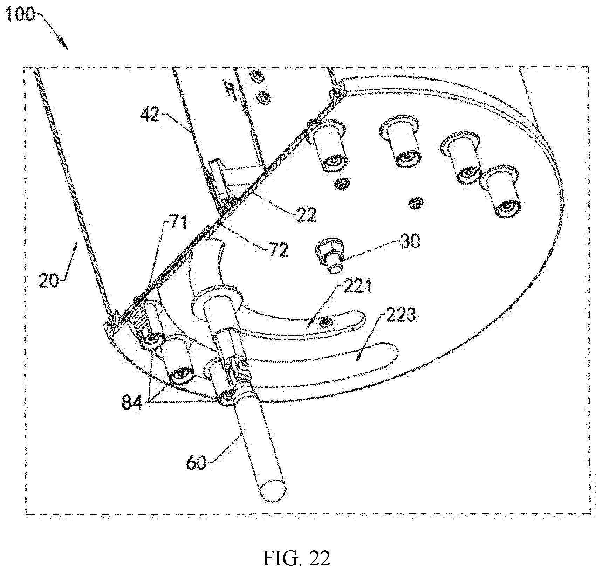

FIG. 20 is a diagram of a partial structure of the base station antenna 100 shown in FIG. 5 in another implementation. For example, FIG. 20 is a sectional view of the base station antenna 100 at A-A. FIG. 21 is an enlarged diagram of the base station antenna 100 shown in FIG. 20 at E. FIG. 22 is a diagram of a structure of the partial base station antenna 100 shown in FIG. 21 at a different angle.

As shown in FIG. 20 to FIG. 22, a size of the first transfer board 71 is changed, so that the second connector 84 is fastened to the first transfer board 71. In this way, the first transfer board 71 may drive the second connector 84 to rotate around the rotation shaft 30. In addition, when the second connector 84 moves, a second cable 82 (not shown in the figure) connected between the second connector 84 and the second reflection plate 42 may move along with the second connector 84. The base station antenna 100 may not need to be provided with an adjustment mechanism 90 to restrict motion space of the second cable 82.

For example, the second board component 712 of the first transfer board 71 is provided with a through hole 7121. There may be one or more through holes 7121. A quantity of through holes 7121 may be equal to a quantity of second connectors 84. The lower-end cover 22 is provided with a second sliding slot 223. The second sliding slot 223 may be an arc-shaped slot with the rotation shaft 30 as a circle center. The second sliding slot 223 is located on a side that is of the first sliding slot 221 and that is away from the rotation shaft 30. A portion of the second connector 84 may extend into the inside of the radome 20 of the base station antenna 100 through the second sliding slot 223 and the through hole 7121, and is fastened to the first transfer board 71 through a fastener (for example, a screw or a pin).

It may be understood that, an input end of the second connector 84 may be located outside the radome 20, and an output end of the second connector 84 may be located inside the radome 20. The input end of the second connector 84 may be electrically connected to the transmission line 400 (refer to FIG. 2) of the base station 1.

It may be understood that, because the second reflection plate 42 is rotatably connected to the rotation shaft 30, the first transfer board 71 is fastened to the second reflection plate 42, and the second connector 84 is fastened to the first transfer board 71, when the second reflection plate 42 rotates relative to the rotation shaft 30, the first transfer board 71 and the second connector 84 also rotate relative to the rotation shaft 30. In this way, the second sliding slot 223 may provide avoidance space for the second connector 84, that is, avoid interference between the second connector 84 and the lower-end cover 22 when the second connector 84 rotates relative to the rotation shaft 30.

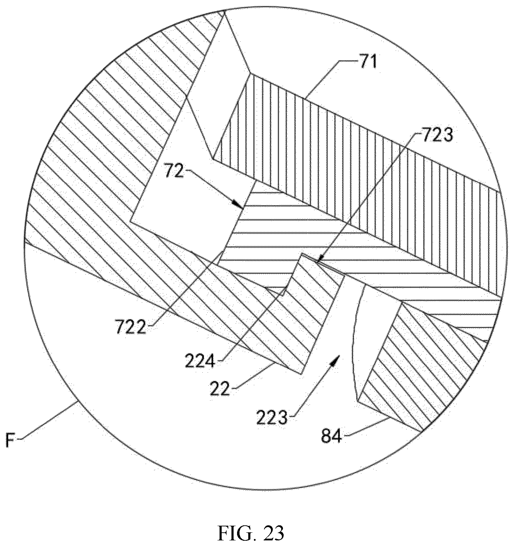

FIG. 23 is an enlarged diagram of the partial base station antenna 100 shown in FIG. 21 at F.

As shown in FIG. 21 and FIG. 23, the base station antenna 100 further includes a sliding block 72. The second connector 84 may pass through the sliding block 72 and the first transfer board 71 through the second sliding slot 223, and extend into the inside of the radome 20. The sliding block 72 is slidably connected to the lower-end cover 22.

For example, the lower-end cover 22 includes a second flange 224. The second flange 224 is disposed around the second sliding slot 223. At least a portion of the second flange 224 may be located in the groove 723 of the sliding block 72. In this case, the bottom part 721 of the sliding block 72 covers the second sliding slot 223 of the lower-end cover 22. The second flange 224 of the lower-end cover 22 is disposed opposite to a portion of the peripheral part 722 of the sliding block 72. The second flange 224 of the lower-end cover 22 may slide in the groove 723.

It may be understood that, one portion of the peripheral part 722 of the sliding block 72 may slide along the first flange 222 of the first sliding slot 221, and the other portion may slide along the second flange 224 of the second sliding slot 223. The first flange 222 and the second flange 224 of the lower-end cover 22 have a guiding function for the sliding block 72, so that when the sliding block 72 rotates relative to the rotation shaft 30, the peripheral part 722 of the sliding block 72 may slide along the first flange 222 and the second flange 224. In this way, in a process in which the second reflection plate 42 rotates relative to the rotation shaft 30, the sliding block 72 covers movement trajectories of the first handle 60 and the second connector 84 and extends over a specific distance. When the first handle 60 is rotated, the sliding block 72 is driven to rotate and cover a gap between the first handle 60 and the lower-end cover 22 and a gap between the second connector 84 and the lower-end cover 22. That is, the sliding block 72 always covers the first sliding slot 221 and the second sliding slot 223 of the lower-end cover 22, to prevent rainwater or dust from entering the interior of the base station antenna 100 from the first sliding slot 221 and the second sliding slot 223.

In another implementation, a manner of connecting the sliding block 72 to the lower-end cover 22 is not specifically limited. For example, grooves are disposed on the first flange 222 and the second flange 224 of the lower-end cover 22. The peripheral part 722 of the sliding block 72 is located in the grooves. In this case, the peripheral part 722 of the sliding block 72 may slide in the grooves of the first flange 222 and the second flange 224 of the lower-end cover 22, to implement a slidable connection between the sliding block 72 and the lower-end cover 22.

Several structures of the base station antenna 100 are specifically described above with reference to related accompanying drawings. The following describes in detail a base station antenna 100 with another structure with reference to related accompanying drawings. Technical content of the following implementation that is the same as that of the foregoing described implementation is not described again.

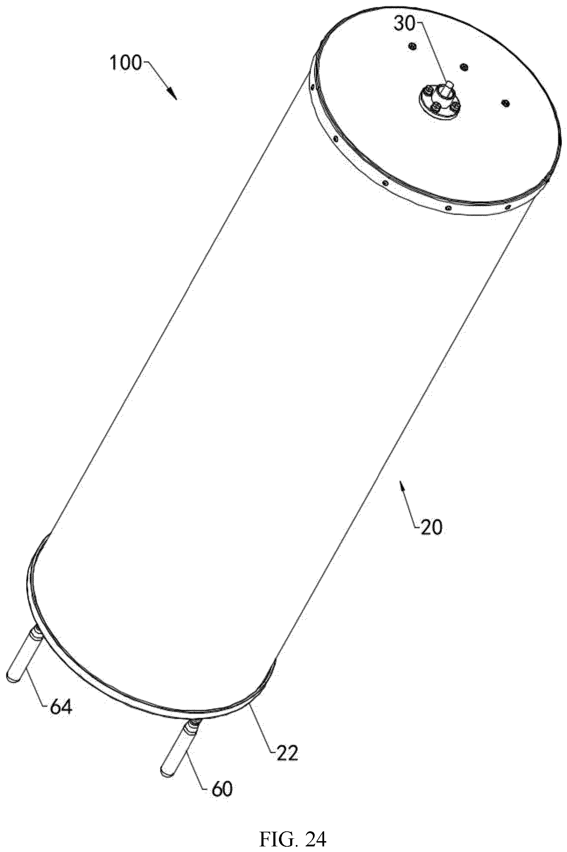

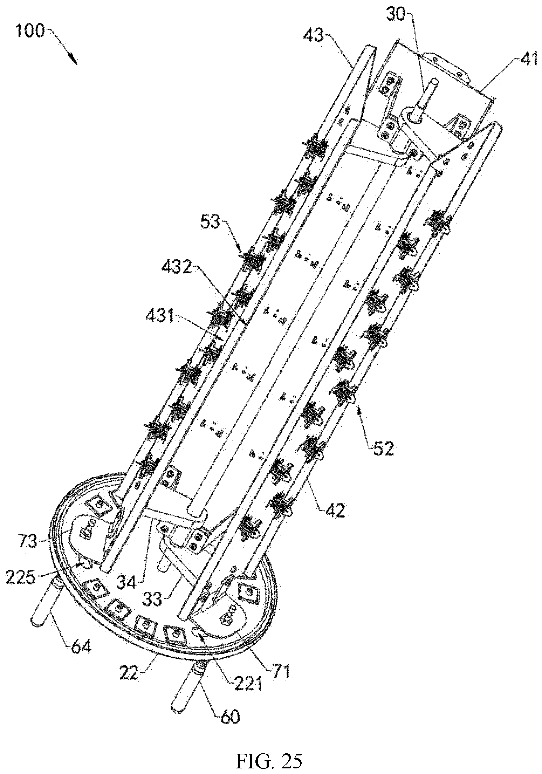

FIG. 24 is a diagram of a partial structure of the base station antenna 100 shown in FIG. 5 in another implementation. FIG. 25 is a diagram of a partial structure of the base station antenna 100 shown in FIG. 24. To clearly show an internal structure of the base station antenna 100, the upper-end cover 21 and the enclosure frame 23 are hidden in FIG. 25.

As shown in FIG. 24 and FIG. 25, the base station antenna 100 further includes a third reflection plate 43, a third radiator 53, and a second handle 64. For example, the third reflection plate 43 has a first surface 431 and a second surface 432 that are disposed in opposite directions. The third radiator 53 may be disposed on the first surface 431 of the third reflection plate 43. For both a disposing manner of the third radiator 53 and a connection manner of the third radiator 53, refer to the disposing manner of the second radiator 52 and the connection manner of the second radiator 52. Details are not described herein again.

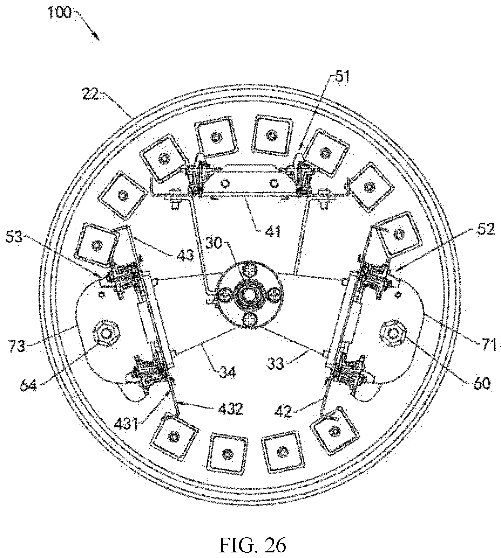

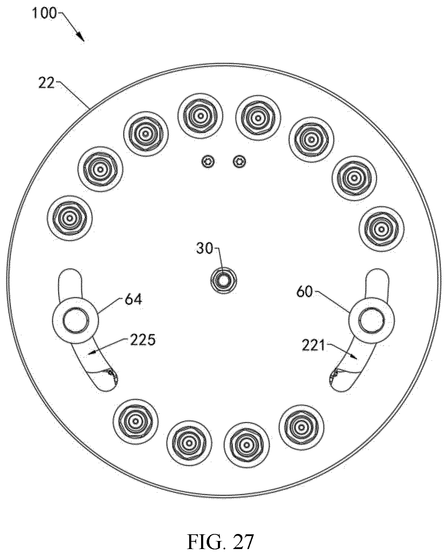

FIG. 26 is a diagram of a structure of the partial base station antenna 100 shown in FIG. 25 at another angle. FIG. 27 is a diagram of a structure of the partial base station antenna 100 shown in FIG. 25 at another angle.

As shown in FIG. 25 to FIG. 27, the third reflection plate 43 is rotatably connected to the rotation shaft 30. The second surface 432 of the third reflection plate 43 is disposed opposite to the rotation shaft 30, that is, the second surface 432 of the third reflection plate 43 is disposed facing the rotation shaft 30.

For example, the base station antenna 100 includes a second rotation support 34. The third reflection plate 43 is rotatably connected to the rotation shaft 30 through the second rotation support 34. For a manner of disposing the second rotation support 34 and the third reflection plate 43 and a connection relationship between the second rotation support 34, the third reflection plate 43, and the rotation shaft 30, refer to the manner of disposing the first rotation support 33 and the second reflection plate 42 and the connection relationship between the first rotation support 33, the second reflection plate 42, and the rotation shaft 30. Details are not described herein again.

It may be understood that, when the third reflection plate 43 rotates relative to the rotation shaft 30, an angle between the third reflection plate 43 and the first reflection plate 41 and an angle between the third reflection plate 43 and the second reflection plate 42 may be adjusted. In this way, the first radiator 51 disposed on the first reflection plate 41, the second radiator 52 disposed on the second reflection plate 42, and the third radiator 53 disposed on the third reflection plate 43 may radiate antenna signals in different directions, or receive antenna signals in different directions, thereby adjusting a radiation direction of an antenna beam of the base station antenna 100. For example, the angle between the third reflection plate 43 and the first reflection plate 41 and the angle between the third reflection plate 43 and the second reflection plate 42 are in a range of 0° to 120°. For example, the angle between the third reflection plate 43 and the first reflection plate 41 and the angle between the third reflection plate 43 and the second reflection plate 42 may be 60°, 90°, 120°, or the like.

It may be understood that, when the third reflection plate 43 rotates relative to the rotation shaft 30, a middle part of the third reflection plate 43 rotates around the rotation shaft 30, a rotation amplitude of the third reflection plate 43 is small, and the third reflection plate 43 occupies small internal space of the base station antenna 100, thereby facilitating miniaturization of the base station antenna 100.

It may be understood that, disposing the third reflection plate 43 and the third radiator 53 can increase a quantity of channels of the base station antenna 100, and can further increase radiation directions of the base station antenna 100. A beam radiation range and a radiation receiving range are expanded. In addition, the base station antenna 100 can further transmit, by using the first reflection plate 41, the second reflection plate 42, and the third reflection plate 43, signals used to provide different communication services at the same time, for example, transmit, by using the first reflection plate 41, signals used to provide the 3rd generation (3G, the 3rd generation) or the 4th generation (4G, the 4th generation) communication service, and transmit, by using the second reflection plate 42 and the third reflection plate 43, signals used to provide the 5th generation (5G, the 5th generation) communication service.

In another implementation, the third reflection plate 43 may alternatively be rotatably connected to the rotation shaft 30 by using another rotating mechanism (for example, a gear group).

As shown in FIG. 25 to FIG. 27, the base station antenna 100 further includes a second transfer board 73. The second transfer board 73 is fastened to the third reflection plate 43 and the second handle 64. For a manner of disposing the second transfer board 73 and the second handle 64 and a connection relationship between the second transfer board 73, the second handle 64, and the third reflection plate 43, refer to the manner of disposing the first transfer board 71 and the first handle 60 and the connection relationship between the first transfer board 71, the first handle 60, and the second reflection plate 42. Details are not described herein again.

It may be understood that, when the second handle 64 is in a working state, the second handle 64 may pull the second transfer board 73 and the third reflection plate 43 to rotate relative to the rotation shaft 30. When the second handle 64 is in a non-working state, the second handle 64 and the second reflection plate 42 are in a tightened state.

As shown in FIG. 25 to FIG. 27, the second handle 64 slides relative to the lower-end cover 22.

For example, the lower-end cover 22 is provided with a third sliding slot 225. The third sliding slot 225 may be an arc-shaped slot with the rotation shaft 30 as a circle center. The third sliding slot 225 and the first sliding slot 221 are disposed at an interval. Specifically, the third sliding slot 225 and the first sliding slot 221 are respectively located on two sides of the rotation shaft 30. A portion of the second handle 64 enters the interior of the base station antenna 100 through the third sliding slot 225.

It may be understood that, because the third reflection plate 43 is rotatably connected to the rotation shaft 30, the second transfer board 73 is fastened to the third reflection plate 43, and the second handle 64 is fastened to the second transfer board 73, when the third reflection plate 43 rotates relative to the rotation shaft 30, the second transfer board 73 and the second handle 64 also rotate relative to the rotation shaft 30. In this way, the third sliding slot 225 may provide avoidance space for the second handle 64, that is, avoid interference between the third handle and the lower-end cover 22 when the third handle rotates relative to the rotation shaft 30.

In another implementation, the base station antenna 100 further includes a second sliding block (not shown in the figure). The second sliding block is fastened to the second handle 64. The second sliding block is slidably connected to the lower-end cover 22. The second sliding block is fastened to the third reflection plate 43. In a process in which the third reflection plate rotates relative to the rotation shaft 30, the second sliding block may always cover the third sliding slot 225, thereby preventing rainwater or dust from entering the interior of the base station antenna 100.

In another implementation, the base station antenna 100 further includes a third cable (not shown in the figure) and a third connector (not shown in the figure). For a disposition manner and a connection relationship of the third cable and the third connector, refer to the disposition manner and the connection relationship of the second cable 82 and the second connector 84. Details are not described herein again. It may be understood that the adjustment mechanism 90 may adjust a position of the third cable, effectively restrict motion space of the third cable, and prevent breakage and avoid entanglement of the third cable.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A base station antenna (100), comprising a rotation shaft (30), a first reflection plate (41), a second reflection plate (42), a first radiator (51), and a second radiator (52), wherein
the first reflection plate (41) comprises a first surface (411) and a second surface (412) that are disposed in opposite directions, and the first radiator (51) is disposed on the first surface (411) of the first reflection plate (41);
the second reflection plate (42) comprises a first surface (421) and a second surface (422) that are disposed in opposite directions, and the second radiator (52) is disposed on the first surface (421) of the second reflection plate (42); and
the first reflection plate (41) is connected to the rotation shaft (30), the second reflection plate (42) is rotatably connected to the rotation shaft (30), and the rotation shaft (30) is located between the second surface (412) of the first reflection plate (41) and the second surface (422) of the second reflection plate (42).

2. The base station antenna (100) according to claim 1, wherein the base station antenna (100) comprises a third reflection plate (43) and a third radiator (53);
the third reflection plate (43) comprises a first surface (431) and a second surface (432) that are disposed in opposite directions, and the third radiator (53) is disposed on the first surface (431) of the third reflection plate (43); and
the third reflection plate (43) is rotatably connected to the rotation shaft (30), and the second surface (432) of the third reflection plate (43) faces the rotation shaft (30).

3. The base station antenna (100) according to claim 1 or 2, wherein the base station antenna (100) further comprises a fastening piece (32), and the first reflection plate (41) is fastened to the rotation shaft (30) through the fastening piece (32).

4. The base station antenna (100) according to any one of claims 1 to 3, wherein the base station antenna (100) further comprises a rotation support (33), and the second reflection plate (42) is rotatably connected to the rotation shaft (30) through the rotation support (33).

5. The base station antenna (100) according to any one of claims 1 to 4, wherein the base station antenna (100) further comprises a first handle (60), the first handle (60) is fastened to the second reflection plate (42), and the first handle (60) is used to pull the second reflection plate (42) to rotate relative to the rotation shaft (30).

6. The base station antenna (100) according to claim 5, wherein the base station antenna (100) further comprises a first transfer board (71), the first transfer board (71) comprises a first board component (711) and a second board component (712), the second board component (712) is connected to the first board component (711), and the second board component (712) is bent relative to the first board component (711); and
the first board component (711) is fastened to the second reflection plate (42), and the first handle (60) is fastened to the second board component (712).

7. The base station antenna (100) according to claim 6, wherein the base station antenna (100) further comprises a nut (713), and the nut (713) is fastened to the second board component (712);
the first handle (60) comprises a first segment (631a), a second segment (631b), and a third segment (631c) that are connected in sequence, and the first segment (631a) and the third segment (631c) are provided with threads; and
the first segment (63 1a) and the second segment (631b) pass through the nut (713), and the third segment (631c) is threadedly connected to the nut (713).

8. The base station antenna (100) according to claim 6 or 7, wherein the base station antenna (100) comprises a connector (84) and a cable (82), the connector (84) is fastened to the second board component (712) of the first transfer board (71), one end of the cable (82) is connected to the connector (84), and the other end is connected to the second reflection plate (42).

9. The base station antenna (100) according to claim 5, wherein the base station antenna (100) comprises a radome (20), the radome (20) comprises an upper-end cover (21), a lower-end cover (22), and an enclosure frame (23), and the upper-end cover (21) and the lower-end cover (22) are respectively installed at two ends of the enclosure frame (23);
one end of the rotation shaft (30) is fastened to the upper-end cover (21), and the other end is fastened to the lower-end cover (22); and
a portion of the first handle (60) passes through the lower-end cover (22) from the outside of the radome (20) and enters the inside of the radome (20), and is fastened to the second reflection plate (42).

10. The base station antenna (100) according to claim 9, wherein the base station antenna (100) comprises a connector (84), a cable (82), and an adjustment mechanism (90), both the connector (84) and the adjustment mechanism (90) are fastened to the lower-end cover (22), one end of the cable (82) is connected to the connector (84), and the other end passes through the adjustment mechanism (90) and is connected to the second reflection plate (42); and
the adjustment mechanism (90) is configured to adjust a position of the cable (82) when the second reflection plate (42) rotates relative to the rotation shaft (30).

11. The base station antenna (100) according to claim 10, wherein the lower-end cover (22) is provided with a first sliding slot (221);
the base station antenna (100) further comprises a sliding block (72), the sliding block (72) is located inside the radome (20), and the sliding block (72) covers the first sliding slot (221); and
a portion of the first handle (60) passes through the first sliding slot (221) and the sliding block (72) from the outside of the radome (20) and enters the inside of the radome (20), and is fastened to the second reflection plate (42).

12. A base station (1), comprising a radio frequency processing unit (500) and the base station antenna (100) according to any one of claims 1 to 11, wherein the radio frequency processing unit (500) is electrically connected to the base station antenna (100).

13. The base station (1) according to claim 12, wherein there are a plurality of base station antennas (100), specifically comprising a first base station antenna (111), a second base station antenna (112), and a third base station antenna (113); and
a first surface (411) of a first reflection plate (41) of the first base station antenna (111) faces in the same direction as a first surface (421) of a second reflection plate (42) of the second base station antenna (112), a first surface (421) of a second reflection plate (42) of the first base station antenna (111) faces in the same direction as a first surface (411) of a first reflection plate (41) of the third base station antenna (113), and a first surface (411) of a first reflection plate (41) of the second base station antenna (112) faces in the same direction as a first surface (421) of a second reflection plate (42) of the third base station antenna (113).
